# EUROPEAN PATENT APPLICATION

(11) **EP 4 607 677 A1**
(43) Date of publication of application: **27.08.2025**
(21) Application number: 24802507.4
(22) Date of filing: 05.01.2024
(51) Int. Cl.: H01M 50/342

(54) **BATTERY CELL, BATTERY AND ELECTRIC DEVICE**

(30) Priority: 06.05.2023 CN 202310502085
(71) Applicant: Contemporary Amperex Technology Co., Limited, Ningde, Fujian 352100 (CN)
(72) Inventor: ZHENG, Ting, Ningde, Fujian 352100 (CN); BAI, Lulu, Ningde, Fujian 352100 (CN); ZHUANG, Yongjie, Ningde, Fujian 352100 (CN); LI, Quankun, Ningde, Fujian 352100 (CN)
(74) Representative: Frick, Robert
(86) International application number: PCT/CN2024/070931
(87) International publication number: WO 2024/230218

(57) **Abstract**

This application provides a battery cell, a battery, and an electric apparatus, and pertains to the field of battery technologies. The battery cell includes an outer shell, the outer shell has a wall portion, and along a thickness direction of the wall portion, the wall portion has a first surface and a second surface opposite to each other. The first surface is provided with a first groove, the second surface is provided with a second groove at a position corresponding to the first groove, a bottom surface of the first groove is provided with a scored groove, and the wall portion is capable of rupturing along the scored groove during pressure relief of the battery cell. This battery cell, first, can reduce the depth required to provide the scored groove on the wall portion, helping lower the manufacturing difficulty of the scored groove and the requirements on production devices, thereby reducing manufacturing costs, and can reduce the forming force exerted on the wall portion in processing the scored groove, helping mitigate the risk of cracks in the wall portion. Second, it can improve the morphology of a flow material during the formation of the scored groove, facilitating the flow of the material generated during the formation of the scored groove, thereby enhancing the structural consistency of the scored groove.

## Description

### CROSS-REFERENCE TO RELATED APPLICATIONS

This application claims priority to Chinese Patent Application No. 2023105020852, filed on May 6, 2023, entitled "BATTERY CELL, BATTERY, AND ELECTRIC APPARATUS", which is incorporated herein by reference in its entirety.

### TECHNICAL FIELD

This application relates to the field of battery technologies, and specifically, to a battery cell, a battery, and an electric apparatus.

### BACKGROUND

With the development of new energy technologies, batteries are increasingly widely used, for example, in mobile phones, laptops, electric scooters, electric vehicles, electric aircraft, electric ships, electric toy cars, electric toy ships, electric toy aircraft, and electric tools.

In battery technologies to enhance the safety of battery cells, a pressure relief structure is typically provided on an outer shell of a battery cell to release internal pressure in the battery cell. This allows the pressure relief structure to rupture at a position with a scored groove when the internal pressure or temperature of the battery cell reaches a threshold, thereby releasing the internal pressure in the battery cell. However, during the manufacturing process of scored grooves, the difficulty in manufacturing scored grooves is great high requirements are imposed on production devices, which is not conducive to reducing the manufacturing costs of battery cells.

### SUMMARY

Embodiments of this application provide a battery cell, a battery, and an electric apparatus capable of effectively reducing the manufacturing costs of the battery cell.

In a first aspect, an embodiment of this application provides a battery cell including an outer shell, where the outer shell has a wall portion, and along a thickness direction of the wall portion, the wall portion has a first surface and a second surface opposite to each other; where the first surface is provided with a first groove, the second surface is provided with a second groove at a position corresponding to the first groove, a bottom surface of the first groove is provided with a scored groove, and the wall portion is capable of rupturing along the scored groove during pressure relief of the battery cell.

In the above technical solution, the outer shell of the battery cell has the wall portion, with the first groove and the second groove respectively provided on the first surface and second surface of the wall portion opposite to each other, the first groove and the second groove are disposed opposite to each other along the thickness direction of the wall portion, and the scored groove is provided on the bottom surface of the first groove. That is, along the thickness direction of the wall portion, the first groove and the second groove are first respectively provided on two sides of a region of the wall portion intended for the scored groove, enabling the scored groove to be provided on the bottom surface of the first groove. This can allow the wall portion to be locally thinned before the scored groove is provided. A battery cell with this structure can, first, reduce the depth required to form the scored groove on the wall portion of the outer shell, helping lower the manufacturing difficulty of the scored groove and the requirements on production devices, thereby reducing manufacturing costs, and can reduce the forming force exerted on the wall portion in processing the scored groove, helping mitigate the risk of cracks in the wall portion and improve the production quality of the battery cell. Second, this can improve the morphology of a flow material during the formation of the scored groove, facilitating the flow of the material generated during the formation of the scored groove, thereby enhancing the structural consistency of the scored groove. Furthermore, as compared with a structure with a groove provided on only one side, respectively providing the structures of the first groove and the second groove on two sides of the wall portion to reduce the depth of the scored groove provided on the wall portion of the outer shell can reduce the depth and difficulty of grooving. This ensures that the material displacements in processing the first groove and the second groove on two sides of the wall portion are the same, decreasing excessively large material displacement in a case that grooving is performed on only one side of the wall portion, thereby reducing processing difficulty and improving the uniformity of material flow in processing the first groove and second groove.

In some embodiments, the scored groove includes a first scored groove segment and a second scored groove segment, and the first scored groove segment and the second scored groove segment intersect.

In the above technical solution, providing the scored groove with the intersecting first scored groove segment and second scored groove segment can first increase the pressure relief area of the battery cell, thereby improving the pressure relief speed of the battery cell; and second allow for a weaker intersection part of the first scored groove segment and the second scored groove segment, enabling easier rupturing to release the internal pressure of the battery cell.

In some embodiments, the scored groove further includes a third scored groove segment, the third scored groove segment is spaced apart from the first scored groove segment, and the second scored groove segment connects the first scored groove segment and the third scored groove segment.

In the above technical solution, the scored groove includes the first scored groove segment and the third scored groove segment that are spaced apart, and the second scored groove segment connecting the first scored groove segment and the third scored groove segment, enabling the wall portion to rupture along the first scored groove segment, the second scored groove segment, and the third scored groove segment during pressure relief of the battery cell. This helps further increase the pressure relief area of the battery cell, thereby enhancing the pressure relief speed of the battery cell.

In some embodiments, a connection position between the first scored groove segment and the second scored groove segment deviates from two ends of the first scored groove segment, and a connection position between the third scored groove segment and the second scored groove segment deviates from two ends of the third scored groove segment.

In the above technical solution, with the connection position between the first scored groove segment and the second scored groove segment disposed between the two ends of the first scored groove segment, and the connection position between the third scored groove segment and the second scored groove segment disposed between the two ends of the third scored groove segment, the two regions of the wall portion that are located on two sides of the second scored groove segment and that are between the first scored groove segment and the third scored groove segment can be opened for pressure relief in an alignment manner during pressure relief of the battery cell. This helps enhance the pressure relief effect of the battery cell, effectively improving the pressure relief speed of the battery cell.

In some embodiments, the first scored groove segment and the third scored groove segment are both perpendicular to the second scored groove segment.

In the above technical solution, with the first scored groove segment and the third scored groove segment both disposed perpendicular to the second scored groove segment, the extension direction of the second scored groove segment is the arrangement direction of the first scored groove segment and the third scored groove segment. First, this can enhance the regularity of the shape of the scored groove, helping reduce the processing difficulty of the scored groove and lower the manufacturing costs of the battery cell. Second, this facilitates pressure-relief-based aligned opening of the two regions of the wall portion that are located on two sides of the second scored groove segment and that are between the first scored groove segment and the third scored groove segment during pressure relief of the battery cell.

In some embodiments, the connection position between the first scored groove segment and the second scored groove segment is located at a midpoint of the first scored groove segment; and/or the connection position between the third scored groove segment and the second scored groove segment is located at a midpoint of the third scored groove segment.

In the above technical solution, with the connection position between the first scored groove segment and the second scored groove segment set at the midpoint of the first scored groove segment, and/or the connection position between the third scored groove segment and the second scored groove segment set at the midpoint of the third scored groove segment, the following phenomenon can be mitigated: a significant large area difference between the two regions of the wall portion that are located on two sides of the second scored groove segment and that are between the first scored groove segment and the third scored groove segment, so that similar forces are required to open in an alignment manner the two regions of the wall portion that are located on two sides of the second scored groove segment and that are between the first scored groove segment and the third scored groove segment during pressure relief of the battery cell, thereby facilitating pressure relief of the battery cell.

In some embodiments, the first groove includes a first groove segment, a second groove segment, and a third groove segment, the first groove segment and the third groove segment are spaced apart, and the second groove segment connects the first groove segment and the third groove segment; where the first scored groove segment is provided on a bottom surface of the first groove segment, the second scored groove segment is provided on a bottom surface of the second groove segment, and the third scored groove segment is provided on a bottom surface of the third groove segment.

In the above technical solution, the first groove is provided with the first groove segment, the second groove segment, and the third groove segment, and the first scored groove segment, the second scored groove segment, and the third scored groove segment of the scored groove are correspondingly provided on the bottom surfaces of the first groove segment, the second groove segment, and the third groove segment. Thus, with the first groove, only a local portion of the wall portion configured for the provision of the scored groove needs to thinned, which helps reduce the processing difficulty of the first groove and reduce the processing range of the first groove.

In some embodiments, the first groove further includes a fourth groove segment, the fourth groove segment connects the first groove segment and the third groove segment, and along an extension direction of the first groove segment, the fourth groove segment is spaced apart from the second groove segment.

In the above technical solution, the first groove is further provided with the fourth groove segment connected to the first groove segment and the third groove segment, and the fourth groove segment is spaced apart from the second groove segment along the extension direction of the first groove segment. This allows the wall portion to rupture along the first scored groove segment, the second scored groove segment, and the third scored groove segment during pressure relief of the battery cell, and the region of the wall portion located among the first scored groove segment, the second scored groove segment, and the third scored groove segment can flip with the position of the fourth groove segment as an axis, allowing for easier opening for pressure relief.

In some embodiments, two ends of the fourth groove segment are respectively connected to one end of the first groove segment and one end of the third groove segment.

In the above technical solution, connecting the two ends of the fourth groove segment to one end of the first groove segment and one end of the third groove segment, respectively increases the area of the region of the wall portion located between the fourth groove segment and the second groove segment. This helps increase the difficulty of flipping the region of the wall portion located among the first scored groove segment, the second scored groove segment, and the third scored groove segment with the position of the fourth groove segment as an axis, and helps increase the pressure relief area of the battery cell.

In some embodiments, the first groove includes two fourth groove segments, and along the extension direction of the first groove segment, the second groove segment is located between the two fourth groove segments.

In the above technical solution, the first groove has the two fourth groove segments, and along the extension direction of the first groove segment, the two fourth groove segments are respectively located on two sides of the second groove segment. This enables the two regions of the wall portion that located on two sides of the second scored groove segment and that are between the first scored groove segment and the third scored groove segment to flip with the positions of the corresponding fourth groove segments as axes during aligned opening, thereby improving the effects of aligned opening and allowing for easier opening for pressure relief.

In some embodiments, the second groove includes a fifth groove segment, a sixth groove segment, and a seventh groove segment, the fifth groove segment and the seventh groove segment are spaced apart, and the sixth groove segment connects the fifth groove segment and the seventh groove segment; where along the thickness direction of the wall portion, the fifth groove segment is provided opposite the first groove segment, the sixth groove segment is provided opposite the second groove segment, and the seventh groove segment is provided opposite the third groove segment.

In the above technical solution, the second groove is provided with the fifth groove segment, the sixth groove segment, and the seventh groove segment, and the fifth groove segment, the sixth groove segment, and the seventh groove segment are respectively provided opposite the first groove segment, the second groove segment, and the third groove segment of the first groove along the thickness direction of the wall portion. Thus, with the first groove and the second groove, local thinning needs to be performed only on two sides of the part of the wall portion intended for the scored groove, which helps reduce the processing difficulty of the second groove and reduces the processing range of the second groove.

In some embodiments, the second groove further includes an eighth groove segment, the eighth groove segment connects the fifth groove segment and the seventh groove segment, and along an extension direction of the fifth groove segment, the eighth groove segment is spaced apart from the sixth groove segment.

In the above technical solution, the second groove further has the eighth groove segment connected to the fifth groove segment and the seventh groove segment, and the eighth groove segment is spaced apart from the sixth groove segment along the extension direction of the fifth groove segment. This allows the wall portion to rupture along the first scored groove segment, the second scored groove segment, and the third scored groove segment during pressure relief of the battery cell, and the region of the wall portion located among the first scored groove segment, the second scored groove segment, and the third scored groove segment to flip with the position of the eighth groove segment as an axis, allowing for easier opening for pressure relief.

In some embodiments, two ends of the eighth groove segment are respectively connected to one end of the fifth groove segment and one end of the seventh groove segment.

In the above technical solution, connecting the two ends of the eighth groove segment to one end of the fifth groove segment and one end of the seventh groove segment, respectively increases the area of the region of the wall portion located between the eighth groove segment and the sixth groove segment. This helps increase the difficulty of flipping the region of the wall portion that are located among the first scored groove segment, the second scored groove segment, and the third scored groove segment with the position of the eighth groove segment as an axis, and helps increase the pressure relief area of the battery cell.

In some embodiments, the second groove includes two eighth groove segments, and along the extension direction of the fifth groove segment, the sixth groove segment is located between the two eighth groove segments.

In the above technical solution, the second groove has the two eighth groove segments, and along the extension direction of the fifth groove segment, the two eighth groove segments are respectively located on two sides of the sixth groove segment. This enables the two regions of the wall portion that are located on two sides of the second scored groove segment and that are located between the first scored groove segment and the third scored groove segment to flip with the positions of the corresponding eighth groove segments as axes during aligned opening, thereby improving the effects of aligned opening and allowing for easier opening for pressure relief.

In some embodiments, along the thickness direction of the wall portion, a depth of the first groove is H₁, and a depth of the second groove is H₂, satisfying 0.2 ≤ H₁/H₂ ≤ 5.

In the above technical solution, the depth of the first groove along the thickness direction of the wall portion is set to be 0.2 to 5 times the depth of the second groove along the thickness direction of the wall portion, that is, a ratio of the depth of the first groove to the depth of the second groove is within 5 times. This mitigates the poor morphology of a flow material during the formation of the scored groove caused by an excessively large deviation between the depths of the first groove and the second groove, thereby facilitating the flow of the material generated during the formation of the scored groove in the wall portion, and further enhancing the structural consistency of the scored groove.

In some embodiments, along the thickness direction of the wall portion, a distance between the bottom surface of the first groove and a bottom surface of the second groove is L, satisfying 0.3 mm ≤ L ≤ 1 mm.

In the above technical solution, setting the distance between the bottom surface of the first groove and the bottom surface of the second groove along the thickness direction of the wall portion to 0.3 mm to 1 mm, that is, the thickness of the portion of the wall portion intended for the scored groove after the first groove and the second groove are provided being 0.3 mm to 1 mm can first mitigate the phenomenon of insufficient strength of the portion of the wall portion intended for the scored groove caused by an excessively small thickness, reducing the risk of fracture of the wall portion in providing the scored groove. Second, this can mitigate the phenomenon that an excessively large thickness results in the excessively large processing difficulty of the scored groove and poor morphology of a flow material during the formation of the scored groove, thereby improving the processing quality of the scored groove.

In some embodiments, a width of the first groove is W₁, satisfying 0.5 mm ≤ W₁ ≤ 10 mm; and/or a width of the second groove is W₂, satisfying 0.5 mm ≤ W₂ ≤ 10 mm.

In the above technical solution, setting the width of the first groove to 0.5 mm to 10 mm can first mitigate the phenomenon that a region on the bottom surface of the first groove intended for the scored groove is too small due to an excessively small width of the first groove, thereby increasing the width of the region intended for the scored groove. This can allow the region of the wall portion provided with the first groove to act as a deformation buffer when the battery cell is impacted, reducing damage to the scored groove, and can facilitate material flow in processing the scored groove, enhancing the consistency of the scored groove. Second, this can mitigate the phenomenon that an excessively large width of the first groove results in an excessively large processing range and reduction in the overall structural strength of the wall portion. Similarly, setting the width of the second groove to 0.5 mm to 10 mm can first mitigate the phenomenon that a region on the bottom surface, of the second groove corresponding to the first groove, intended for the scored groove is too small due to an excessively small width of the second groove, thereby increasing the width of the region intended for the scored groove. This can allow the region of the wall portion provided with the second groove to act as a deformation buffer when the battery cell is impacted, reducing damage to the scored groove, and can facilitate material flow in processing the scored groove, enhancing the consistency of the scored groove. Second, this can mitigate the phenomenon that an excessively large width of the second groove results in an excessively large processing range and reduction in the overall structural strength of the wall portion.

In some embodiments, the first groove is a stepped groove provided along the thickness direction of the wall portion; and/or the second groove is a stepped groove provided along the thickness direction of the wall portion.

In the above technical solution, with the first groove disposed as a stepped groove structure, the first groove is a structure undergoing multiple times of processing, reducing the depth of each individual processing of the first groove, thereby lowering processing difficulty and reducing the forming force exerted on the wall portion in processing the first groove. This helps mitigate the risk of cracks in the wall portion. Similarly, with the second groove disposed as a stepped groove structure, the second groove is a structure undergoing multiple times of processing, reducing the depth of each individual processing of the second groove, thereby lowering processing difficulty and reducing the forming force exerted on the wall portion in processing the second groove. This helps mitigate the risk of cracks in the wall portion.

In some embodiments, along the thickness direction of the wall portion, the first surface is provided facing away from an interior of the outer shell.

In the above technical solution, the first surface is the surface of the wall portion facing away from the interior of the outer shell, so that the scored groove is provided on the side of the wall portion facing away from the interior of the outer shell. This helps reduce the processing difficulty of the scored groove, facilitating the formation of the scored groove on the wall portion.

In some embodiments, along the thickness direction of the wall portion, a sunken groove is provided on a side of the wall portion facing away from an interior of the outer shell, and two opposite surfaces of a bottom wall of the sunken groove are the first surface and the second surface, respectively.

In the above technical solution, the sunken groove is provided on the side of the wall portion facing away from the interior of the outer shell, with the two opposite surfaces of the bottom wall of the sunken groove being the first surface and the second surface along the thickness direction of the wall portion. That is, the first groove and the second groove are respectively provided on two sides of the bottom wall of the sunken groove along the thickness direction of the wall portion, so that the sunken groove can provide a certain protective effect to the region of the wall portion provided with the scored groove, reducing wear or damage to the region of the wall portion provided with the scored groove caused under the action of external environments, thereby helping improve the service life of the battery cell.

In some embodiments, along the thickness direction of the wall portion, a protrusion is formed on a side of the wall portion facing towards the interior of the outer shell and at a position corresponding to the sunken groove.

In the above technical solution, with the protrusion formed on the side of the wall portion facing away from the sunken groove and at a position corresponding to the sunken groove, the sunken groove of the wall portion is a concave-convex structure formed by stamping, enabling the sunken groove and the protrusion to be formed on two sides of the wall portion, respectively. First, a wall portion with this structure is easy to manufacture and helps reduce the processing difficulty of the sunken groove, thereby improving the processing efficiency of the sunken groove. Second, it can effectively enhance the structural strength of the bottom wall of the sunken groove, mitigating the risk of deformation or fracture when the first groove and the second groove are provided on two sides of the bottom wall of the sunken groove, thereby helping improve the production quality of the battery cell.

In some embodiments, the outer shell includes a housing and an end cap; where an accommodation cavity with an opening is formed in the housing, the accommodation cavity is configured to accommodate an electrode assembly, the end cap seals the opening, and the end cap is the wall portion.

In the above technical solution, the wall portion of the outer shell is the end cap of the outer shell configured to seal the opening of the housing. A battery cell with this structure is beneficial to providing the first groove and the second groove on the end cap and facilitates the forming of the scored groove on the bottom surface of the first groove. This can effectively reduce the processing difficulty of providing the first groove, the second groove, and the scored groove on the outer shell of the battery cell, thereby improving the production efficiency of the battery cell.

In some embodiments, the outer shell includes a housing and an end cap; where the housing includes an integrally formed sidewall and the wall portion, the sidewall surrounds a periphery of the wall portion, along the thickness direction of the wall portion, one end of the sidewall is connected to the wall portion, the other end encloses to form an opening, and the sidewall and the wall portion together define an accommodation cavity configured to accommodate an electrode assembly, and the end cap seals the opening.

In the above technical solution, the wall portion is a wall of the housing disposed opposite to the end cap along the thickness direction of the wall portion. A battery cell with this structure can allow the region of the outer shell provided with the scored groove to be distant from the end cap, and allow for no direct connection between the wall portion and the end cap. This can mitigate the influence of stress generated during the connection between the end cap and the housing on the scored groove, mitigating the phenomenon of cracking or structural strength reduction at the position of the wall portion provided with the scored groove. Consequently, this can effectively reduce the occurrence of premature valve opening of the battery cell to relieve pressure, thereby enhancing the stability and service life of the battery cell.

In a second aspect, an embodiment of this application further provides a battery including the battery cell described above.

In a third aspect, an embodiment of this application further provides an electric apparatus including the battery described above.

### DESCRIPTION OF THE DRAWINGS

To more clearly illustrate the technical solutions of the embodiments of this application, the drawings required for use in the embodiments will be briefly introduced below. It should be understood that the following drawings only illustrate certain embodiments of this application and should not be considered as limiting the scope. For those skilled in the art, other related drawings can be obtained based on these drawings without creative effort.
FIG. 1 is a schematic structural diagram of a vehicle provided by some embodiments of this application;
FIG. 2 is an exploded structural view of a battery provided by some embodiments of this application;
FIG. 3 is an exploded structural view of a battery cell provided by some embodiments of this application;
FIG. 4 is a partial cross-sectional view of a wall portion of an outer shell provided by some embodiments of this application;
FIG. 5 is a partial enlarged view of portion A of the wall portion shown in FIG. 4;
FIG. 6 is a partial schematic structural diagram of a wall portion of an outer shell facing towards a first surface provided by some embodiments of this application;
FIG. 7 is a partial schematic structural diagram of a wall portion of an outer shell facing towards a second surface provided by some embodiments of this application;
FIG. 8 is a schematic structural diagram of a wall portion of an outer shell provided by some other embodiments of this application;
FIG. 9 is a partial schematic structural diagram of a wall portion of an outer shell facing towards a first surface provided by some other embodiments of this application;
FIG. 10 is a schematic structural diagram of a wall portion of an outer shell provided by some further embodiments of this application;
FIG. 11 is a partial schematic structural diagram of a wall portion of an outer shell facing towards a second surface provided by some further embodiments of this application;
FIG. 12 is a schematic structural diagram of a wall portion of an outer shell provided by some other embodiments of this application;
FIG. 13 is a partial cross-sectional view of a wall portion of an outer shell provided by some other embodiments of this application; and
FIG. 14 is a partial enlarged view of portion B of a wall portion of an outer shell shown in FIG. 13.

Reference signs: 1000: vehicle; 100: battery; 10: box; 11: first box body; 12: second box body; 20: battery cell; 21: outer shell; 211: wall portion; 2111: first surface; 2112: second surface; 2113: first groove; 2113a: first groove segment; 2113b: second groove segment; 2113c: third groove segment; 2113d: fourth groove segment; 2114: second groove; 2114a: fifth groove segment; 2114b: sixth groove segment; 2114c: seventh groove segment; 2114d: eighth groove segment; 2115: scored groove; 2115a: first scored groove segment; 2115b: second scored groove segment; 2115c: third scored groove segment; 2116: opening zone; 2117: sunken groove; 2118: protrusion; 212: housing; 2121: opening; 213: end cap; 22: electrode assembly; 221: tab; 23: electrode terminal; 200: controller; 300: motor; and X: thickness direction of wall portion.

### DETAILED DESCRIPTION

To make the objectives, technical solutions, and advantages of the embodiments of this application clearer, the technical solutions in the embodiments of this application will be described clearly below in conjunction with the drawings in the embodiments of this application. It is evident that the described embodiments are some, but not all, embodiments of this application. Based on the embodiments in this application, all other embodiments obtained by those skilled in the art without creative effort fall within the scope of protection of this application.

Unless otherwise defined, all technical and scientific terms used in this application have the same meaning as commonly understood by those skilled in the technical field of this application; the terms used in the specification of this application are for the purpose of describing specific embodiments only and are not intended to limit this application; the terms "including" and "having" and any variations thereof in the specification, claims, and the above description of the drawings of this application are intended to cover non-exclusive inclusion. The terms "first", "second", and the like in the specification, claims, or the above description of the drawings of this application are used to distinguish different objects and not to describe a specific order or priority.

Reference to "embodiment" in this application means that a specific feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments.

In the description of this application, it should be noted that, unless otherwise explicitly specified and limited, the terms "installed," "connected," "connection," and "attached" should be understood in a broad sense, for example, it may be a fixed connection, a detachable connection, or an integral connection; it may be a direct connection, an indirect connection through an intermediary, or an internal communication between two elements. For those skilled in the art, the specific meanings of the above terms in this application can be understood according to specific circumstances.

The term "and/or" in this application is merely an association relationship describing associated objects, indicating that three relationships may exist, for example, A and/or B may indicate: A exists alone, A and B exist simultaneously, and B exists alone. In addition, the character "/" in this application generally indicates that the associated objects before and after it are in an "or" relationship.

In the embodiments of this application, the same reference signs denote the same components, and for brevity, detailed descriptions of the same components are omitted in different embodiments. It should be understood that the thickness, length, width, and other dimensions of various components in the embodiments of this application shown in the drawings, as well as the overall thickness, length, width, and other dimensions of the integrated device, are for illustrative purposes only and should not constitute any limitation to this application.

The term "multiple" appearing in this application refers to more than two (including two).

In the embodiments of this application, the battery cell may be a secondary battery, which refers to a battery cell that can be recharged to activate the active material and continue to be used after discharge.

The battery cell may be a lithium-ion battery, sodium-ion battery, sodium-lithium-ion battery, lithium metal battery, sodium metal battery, lithium-sulfur battery, magnesium-ion battery, nickel-hydrogen battery, nickelcadmium battery, lead-acid battery, or the like, and the embodiments of this application are not limited thereto.

The battery cell generally includes an electrode assembly. The electrode assembly includes a positive electrode, a negative electrode, and a separator. During the charging and discharging process of the battery cell, active ions (for example, lithium ions) intercalate and deintercalate back and forth between the positive electrode and the negative electrode. The separator is provided between the positive electrode and the negative electrode, preventing short-circuiting between the positive and negative electrodes while allowing active ions to pass through.

In some embodiments, the positive electrode may be a positive electrode plate, which may include a positive electrode current collector and a positive electrode active material provided on at least one surface of the positive electrode current collector.

As an example, the positive electrode current collector has two opposite surfaces in its thickness direction, and the positive electrode active material is provided on either or both of the two opposite surfaces of the positive electrode current collector.

As an example, the positive electrode current collector may be a metal foil or a composite current collector. For instance, as a metal foil, it may be aluminum or stainless steel treated with a silver surface, stainless steel, copper, aluminum, nickel, carbon electrode, carbon, nickel, or titanium. The composite current collector may include a polymer material base layer and a metal layer. The composite current collector may be formed by forming a metal material (for example, aluminum, aluminum alloy, nickel, nickel alloy, titanium, titanium alloy, silver, and silver alloy) on a polymer material substrate (for example, a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. However, this application is not limited to these materials, and other conventional materials that can be used as positive electrode active materials for batteries may also be used. These positive electrode active materials may be used alone or in combination of two or more. Examples of lithium-containing phosphates may include, but are not limited to, at least one of lithium iron phosphate (for example, LiFePO4 (also LFP for short)), a composite of lithium iron phosphate and carbon, lithium manganese phosphate (for example, LiMnPO4), a composite of lithium manganese phosphate and carbon, lithium manganese iron phosphate, and a composite of lithium manganese iron phosphate and carbon.

In some embodiments, the negative electrode may be a negative electrode plate, which may include a negative electrode current collector.

As an example, the negative electrode current collector may be a metal foil, a foam metal, or a composite current collector. For instance, as a metal foil, it may be aluminum or stainless steel surface treated with silver, stainless steel, copper, aluminum, nickel, carbon electrode, carbon, nickel, or titanium. The foam metal may be foam nickel, foam copper, foam aluminum, foam alloy, or foam carbon. The composite current collector may include a polymer material base layer and a metal layer. The composite current collector may be formed by forming a metal material (for example, copper, copper alloy, nickel, nickel alloy, titanium, titanium alloy, silver, or silver alloy) on a polymer material substrate (for example, a substrate of polypropylene, polyethylene terephthalate, polybutylene terephthalate, polystyrene, or polyethylene).

As an example, the negative electrode plate may include a negative electrode current collector and a negative electrode active material provided on at least one surface of the negative electrode current collector.

As an example, the negative electrode current collector has two opposite surfaces in its thickness direction, and the negative electrode active material is provided on either or both of the two opposite surfaces of the negative electrode current collector.

As an example, the negative electrode active material may be a known negative electrode active material used in battery cells in the art. As an example, the negative electrode active material may include at least one of the following materials: artificial graphite, natural graphite, soft carbon, hard carbon, silicon-based materials, tin-based materials, and lithium titanate.

In some embodiments, the material of the positive electrode current collector may be aluminum, and the material of the negative electrode current collector may be copper.

In some embodiments, the electrode assembly further includes a separator, which is provided between the positive electrode and the negative electrode.

In some embodiments, the separator is a separation membrane. The type of separation membrane may vary, and any well-known porous structure separation membrane with good chemical stability and mechanical stability may be selected.

As an example, the main material of the separation membrane may be selected from at least one of glass fiber, non-woven fabric, polyethylene, polypropylene, polyvinylidene fluoride, and ceramic.

In some embodiments, the separator is a solid electrolyte. The solid electrolyte is provided between the positive electrode and the negative electrode, serving both to conduct ions and to isolate the positive and negative electrodes.

In some embodiments, the battery cell further includes an electrolyte, and the electrolyte conducts ions between the positive and negative electrodes. This application does not specifically limit the type of electrolyte, which can be selected according to needs. The electrolyte may be liquid, gel, or solid.

In some embodiments, the electrode assembly is a wound structure. The positive electrode plate and the negative electrode plate are wound into a wound structure.

In some embodiments, the electrode assembly is a laminated structure.

In some embodiments, the shape of the electrode assembly may be cylindrical, flat, or prismatic.

In some embodiments, the electrode assembly is provided with tabs, which can conduct current from the electrode assembly. The tabs include a positive tab and a negative tab.

In some embodiments, the battery cell may include an outer shell. The outer shell is used to encapsulate the electrode assembly, electrolyte, and other components. The outer shell may be a steel shell, aluminum shell, plastic shell (for example, polypropylene), composite metal shell (for example, copper-aluminum composite outer shell), or aluminum-plastic film, or the like.

As an example, the battery cell may be a cylindrical battery cell, a prismatic battery cell, a pouch battery cell, or a battery cell of other shapes. Prismatic battery cells include, but are not limited to, square-shell battery cells, blade-shaped battery cells, and multi-prismatic battery cells, such as hexagonal prismatic battery cells.

The battery mentioned in the embodiments of this application refers to a single physical module including one or more battery cells to provide higher voltage and capacity.

In some embodiments, the battery may be a battery module. When there are multiple battery cells, the multiple battery cells are arranged and fixed to form a battery module.

In some embodiments, the battery may be a battery pack, which includes a box and battery cells, with the battery cells or battery modules accommodated in the box.

In some embodiments, the box may serve as part of the chassis structure of a vehicle. For example, a portion of the box may form at least part of the floor of the vehicle, or a portion of the box may form at least part of the crossbeams and longitudinal beams of the vehicle.

In some embodiments, the battery may be an energy storage device. The energy storage device includes an energy storage container, an energy storage cabinet, or the like.

Batteries have outstanding advantages such as high energy density, low environmental pollution, high power density, long service life, wide adaptability, and low self-discharge coefficient, making them an important component of modern new energy development. With the rapid development and increasing demand for batteries, the requirements for batteries in terms of manufacturing costs and production quality have also increased.

For a typical battery cell, a pressure relief structure is usually provided on the outer shell of the battery cell, allowing the pressure relief structure to rupture when the internal pressure or temperature of the battery cell reaches a threshold, thereby releasing the internal pressure and enhancing the safety of the battery cell. In related technologies, to improve the structural strength and stability of the pressure relief structure provided on the outer shell, an integral forming process, such as a stamping process, is typically used to form the pressure relief structure on the outer shell, thereby providing the scored groove on the outer shell to create the pressure relief structure on the outer shell. However, due to the relatively thick wall of the outer shell, on one hand, the depth required for the scored groove is large, leading to high manufacturing difficulty of the scored groove and a greater demand for production equipment, which is not conducive to reducing the manufacturing costs of the battery cell. Additionally, the forming force required during the formation of the scored groove is substantial, making it highly likely for cracks to appear at the position of the wall portion where the scored groove is provided, which is detrimental to improving the production quality of the battery cell. Second, the morphology of a flow material during the formation of the scored groove on the outer shell of the battery cell is poor, which is not conducive to the flow of material generated during the formation of the scored groove, resulting in poor structural consistency of the scored groove.

Based on the above considerations, to address the issues of high manufacturing costs and poor production quality of battery cells, the embodiments of this application provide a battery cell. The battery cell includes an outer shell, the outer shell has a wall portion, and along the thickness direction of the wall portion, the wall portion has the first surface and second surface opposite to each other. The first surface is provided with a first groove, the second surface is provided with a second groove at a position corresponding to the first groove, the bottom surface of the first groove is provided with a scored groove, and the wall portion can rupture along the scored groove during pressure relief of the battery cell.

In a battery cell with this structure, the outer shell of the battery cell has the wall portion, with the first groove and the second groove respectively provided on the first surface and second surface of the wall portion opposite to each other, the first groove and the second groove are disposed opposite to each other along the thickness direction of the wall portion, and the scored groove is provided on the bottom surface of the first groove. That is, along the thickness direction of the wall portion, the first groove and the second groove are first respectively provided on two sides of a region of the wall portion intended for the scored groove, enabling the scored groove to be provided on the bottom surface of the first groove. This can allow the wall portion to be locally thinned before the scored groove is provided. A battery cell with this structure can, first, reduce the depth required to form the scored groove on the wall portion of the outer shell, helping lower the manufacturing difficulty of the scored groove and the requirements on production devices, thereby reducing manufacturing costs, and can reduce the forming force exerted on the wall portion in processing the scored groove, helping mitigate the risk of cracks in the wall portion and improve the production quality of the battery cell. Second, this can improve the morphology of a flow material during the formation of the scored groove, facilitating the flow of the material generated during the formation of the scored groove, thereby enhancing the structural consistency of the scored groove.

Furthermore, as compared with a structure with a groove provided on only one side, respectively providing the structures of the first groove and the second groove on two sides of the wall portion to reduce the depth of the scored groove provided on the wall portion of the outer shell can reduce the depth and difficulty of grooving. This ensures that the material displacements in processing the first groove and the second groove on two sides of the wall portion are the same, decreasing excessively large material displacement in a case that grooving is performed on only one side of the wall portion, thereby reducing processing difficulty and improving the uniformity of material flow in processing the first groove and second groove.

The battery cell disclosed in the embodiments of this application can be used, but is not limited to, in electric apparatuses such as vehicles, ships, or aircraft, and can also be used in energy storage devices. A power supply system for such an electric apparatus can be composed of the battery cell and battery disclosed in this application, which helps alleviate the issue of high manufacturing difficulty in providing a scored groove on the outer shell of the battery cell, thereby reducing the manufacturing costs of the battery cell.

The embodiments of this application provide an electric apparatus using a battery as a power source. The electric apparatus may include, but is not limited to, mobile phones, tablets, laptops, electric toys, electric tools, electric scooters, electric vehicles, ships, and spacecrafts. Electric toys may include fixed or mobile electric toys, such as game consoles, electric car toys, electric ship toys, and electric airplane toys. Spacecrafts may include airplanes, rockets, space shuttles, and spaceships.

For convenience of explanation, the following embodiments take a vehicle 1000 as an example of an electric apparatus according to an embodiment of this application.

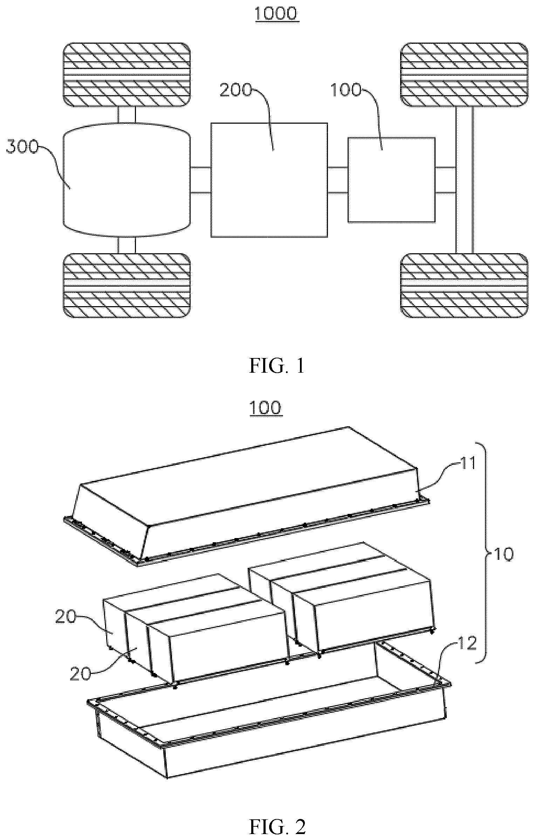

Referring to FIG. 1, FIG. 1 is a schematic structural diagram of a vehicle 1000 provided by some embodiments of this application. The vehicle 1000 may be a fuel vehicle, a gas vehicle, or a new energy vehicle, and the new energy vehicle may be a pure electric vehicle, a hybrid electric vehicle, or an extended-range vehicle. A battery 100 is provided inside the vehicle 1000, and the battery 100 may be provided at the bottom, front, or rear of the vehicle 1000. The battery 100 may be used to supply power to the vehicle 1000, for example, the battery 100 may serve as an operational power source or usage power source for the vehicle 1000. The vehicle 1000 may further include a controller 200 and a motor 300, with the controller 200 used to control the battery 100 to supply power to the motor 300, for example, for the power demand during starting, navigation, and driving of the vehicle 1000.

In some embodiments of this application, the battery 100 may not only serve as an operational power source or usage power source for the vehicle 1000 but also as a driving power source for the vehicle 1000, replacing or partially replacing fuel or natural gas to provide driving power for the vehicle 1000.

Referring to FIG. 2, FIG. 2 is an exploded structural view of a battery 100 provided by some embodiments of this application. The battery 100 may include a box 10 and a battery cell 20, with the battery cell 20 accommodated within the box 10.

The box 10 is used to provide an assembly space for the battery cell 20, and the box 10 may adopt various structures. In some embodiments, the box 10 may include a first box body 11 and a second box body 12, with the first box body 11 and the second box body 12 covering each other, and the first box body 11 and the second box body 12 together defining an assembly space for accommodating the battery cell 20. The second box body 12 may be a hollow structure with one end open, and the first box body 11 may be a plate-like structure, with the first box body 11 covering the open side of the second box body 12, so that the first box body 11 and the second box body 12 together define the assembly space; in other embodiments, the first box body 11 and the second box body 12 may both be hollow structures with one side open, with the open side of the first box body 11 covering the open side of the second box body 12. Certainly, the box 10 formed by the first box body 11 and the second box body 12 may have various shapes, such as a cylinder or a cuboid. For example, in FIG. 2, the shape of the box 10 is a cuboid.

Optionally, in the battery 100, there may be one battery cell 20 accommodated within the box 10, or there may be multiple battery cells 20. When multiple battery cells 20 are accommodated within the box 10, the multiple battery cells 20 may be connected in series, in parallel, or in series-parallel, where series-parallel means that the multiple battery cells 20 are connected in both series and parallel. The multiple battery cells 20 may be directly connected in series, in parallel, or in series-parallel, and then the entire structure formed by the multiple battery cells 20 is accommodated within the box 10; of course, in some embodiments, the battery 100 may also be formed by first connecting multiple battery cells 20 in series, in parallel, or in series-parallel to form a battery module, and then multiple battery modules are connected in series, in parallel, or in series-parallel to form an overall structure, which is accommodated within the box 10.

In some embodiments, the battery 100 may further include other structures, for example, the battery 100 may further include a busbar component, which is provided within the box 10 and connects multiple battery cells 20 to achieve electrical connection between the multiple battery cells 20.

Each battery cell 20 may be a secondary battery or a primary battery; it may also be a lithium-sulfur battery, a sodium-ion battery, or a magnesium-ion battery, but the battery cell 20 is not limited thereto. The battery cell 20 may be cylindrical, flat, cuboidal, or of other shapes. For example, in FIG. 2, the battery cell 20 has a cuboidal structure.

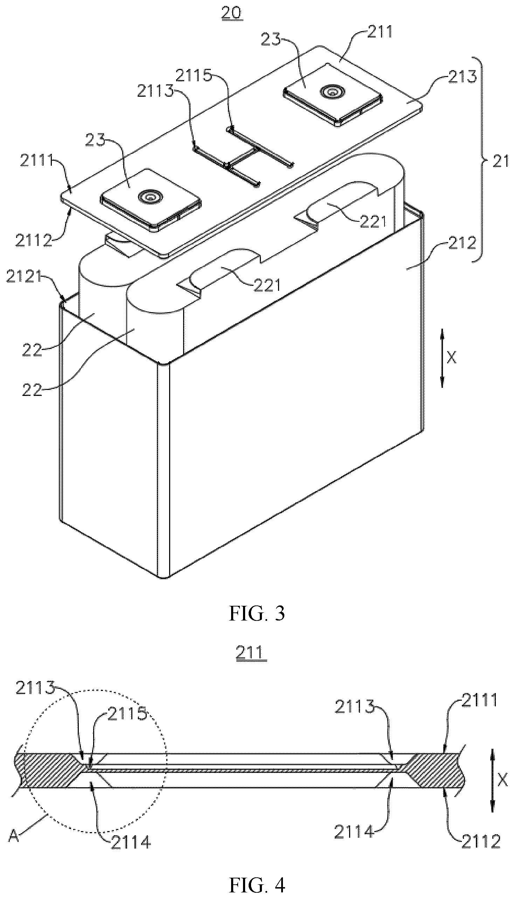

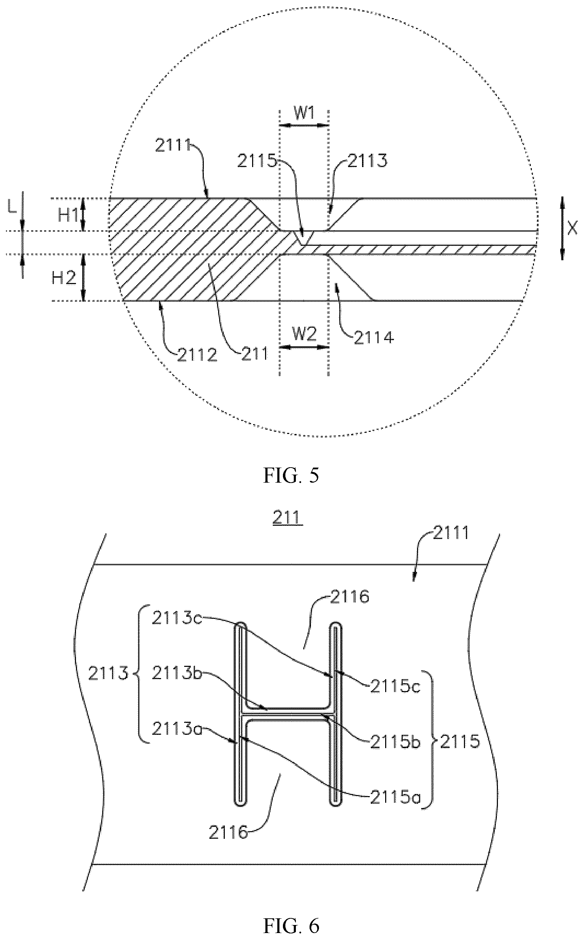

According to some embodiments of this application, referring to FIG. 3, FIG. 4, and FIG. 5, FIG. 3 is an exploded structural view of a battery cell 20 provided by some embodiments of this application, FIG. 4 is a partial cross-sectional view of a wall portion 211 of an outer shell 21 provided by some embodiments of this application, and FIG. 5 is a partial enlarged view of portion A of the wall portion 211 of the outer shell 21 shown in FIG. 4. This application provides a battery cell 20, the battery cell 20 includes an outer shell 21, the outer shell 21 has a wall portion 211, and along a thickness direction X of the wall portion, the wall portion 211 has a first surface 2111 and a second surface 2112 opposite to each other. The first surface 2111 is provided with a first groove 2113, the second surface 2112 is provided with a second groove 2114 at a position corresponding to the first groove 2113, a bottom surface of the first groove 2113 is provided with a scored groove 2115, and the wall portion 211 is capable of rupturing along the scored groove 2115 when the battery cell 20 relieves pressure.

The wall portion 211 has the first surface 2111 and second surface 2112 opposite to each other, that is, the first surface 2111 and the second surface 2112 of the wall portion 211 face towards the interior and exterior of the outer shell 21, respectively along the thickness direction X of the wall portion. Certainly, the first surface 2111 may be disposed facing towards the interior of the outer shell 21 or facing away from the interior of the outer shell 21.

The first surface 2111 is provided with the first groove 2113, and the scored groove 2115 is provided on the bottom surface of the first groove 2113. The first surface 2111 may be a surface of the wall portion 211 facing towards the interior of the outer shell 21 or a surface of the wall portion 211 facing away from the interior of the outer shell 21, that is, the scored groove 2115 may be provided facing towards the interior of the outer shell 21 or facing away from the interior of the outer shell 21.

The bottom surface of the first groove 2113 is provided with the scored groove 2115, that is, the first surface 2111 is first formed with the first groove 2113, and then the scored groove 2115 is formed on the bottom surface of the first groove 2113, making the first groove 2113 and the scored groove 2115 structures arranged along the thickness direction X of the wall portion. In an embodiment where the second surface 2112 is provided with the second groove 2114 at a position corresponding to the first groove 2113 along the thickness direction X of the wall portion, the first groove 2113, the scored groove 2115, and the second groove 2114 are sequentially arranged along the thickness direction of the wall portion.

It should be noted that the first groove 2113, the second groove 2114, and the scored groove 2115 are all provided on the wall portion 211, that is, the component of the outer shell 21 of the battery cell 20 configured to release the internal pressure of the battery cell 20 is a structure integrally formed with the outer shell 21.

Optionally, the shape of the scored groove 2115 provided on the bottom surface of the first groove 2113 may vary. For example, the scored groove 2115 may be a stripe structure, an arc structure, a "C" structure, an "S" structure, a "V" structure, a "Z" structure, an "X" structure, or an "H" structure. For example, in FIG. 3, the shape of the scored groove 2115 is an "H" shape.

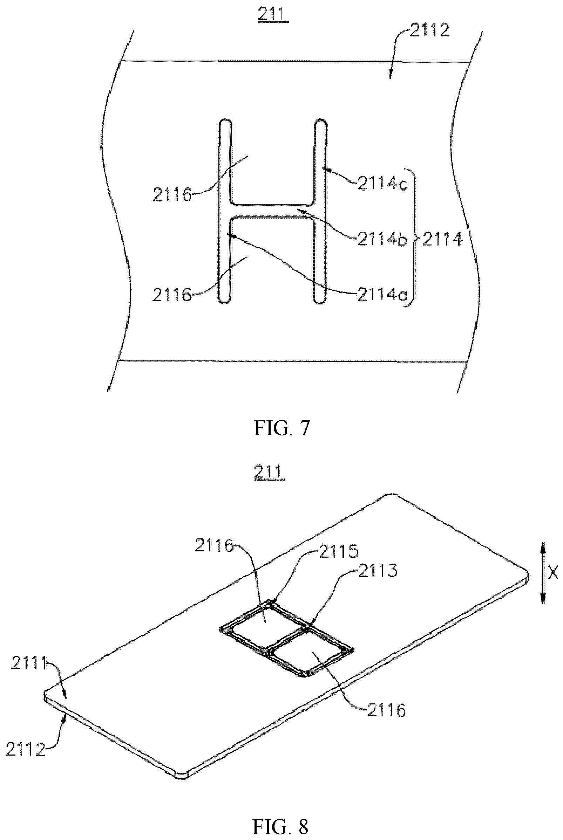

Optionally, the structures of the first groove 2113 and the second groove 2114 provided on two opposite sides of the wall portion 211 may also vary. For example, the first groove 2113 and the second groove 2114 may be relatively large recesses provided on the first surface 2111 and the second surface 2112, respectively, with a groove side surface of the first groove 2113 and a side surface of the second groove 2114 both surrounding the outer side of the scored groove 2115, such as being rectangular recesses, circular recesses, or elliptical recesses. Certainly, the first groove 2113 and the second groove 2114 may also be recesses whose shapes are at least partially the same as the shape of the scored groove 2115. For example, referring to FIG. 6 and FIG. 7, FIG. 6 is a partial schematic structural diagram of the wall portion 211 of the outer shell 21 facing towards the first surface 2111 provided by some embodiments of this application, and FIG. 7 is a partial schematic structural diagram of the wall portion 211 of the outer shell 21 facing towards the second surface 2112 provided by some embodiments of this application. At least part of the first groove 2113 and at least part of the second groove 2114 are structures having the same shape as the scored groove 2115. For example, the scored groove 2115 is "H" shaped, and the corresponding positions of the first groove 2113 and the second groove 2114 disposed with the scored groove 2115 are also "H" shaped.

In some embodiments, referring to FIG. 3, the battery cell 20 may further include an electrode assembly 22. The electrode assembly 22 is accommodated within the outer shell 21. The electrode assembly 22 is a component of the battery cell 20 where electrochemical reactions occur, and the structure of the electrode assembly 22 may vary. For example, the electrode assembly 22 may be a wound structure formed by winding a positive electrode plate, a separator, and a negative electrode plate, or a laminated structure formed by laminating a positive electrode plate, a separator, and a negative electrode plate.

For example, the separator is a separation membrane, and the main material of the separation membrane may be selected from at least one of glass fiber, non-woven fabric, polyethylene, polypropylene, and polyvinylidene fluoride.

Optionally, there may be one or more electrode assemblies 22 accommodated within the outer shell 21. For example, in FIG. 3, the outer shell 21 of the battery cell 20 is provided with two electrode assemblies 22, and the two electrode assemblies 22 are stacked along their thickness direction, that is, the two electrode assemblies 22 are stacked along the thickness direction of the battery cell 20. Certainly, in other embodiments, there may alternatively be one, three, four, five, six, seven, or eight electrode assemblies 22 accommodated within the outer shell 21.

The outer shell 21 may also be configured to accommodate an electrolyte, such as a liquid electrolyte. The outer shell 21 may have various structural forms, such as a cylinder or a cuboid. Similarly, the material of the outer shell 21 may also vary, for example, copper, iron, aluminum, steel, or aluminum alloy.

In some embodiments, the outer shell 21 may include a housing 212 and an end cap 213. An accommodation cavity is formed within the housing 212, the accommodation cavity is configured to accommodate the electrode assembly 22, and the accommodation cavity has an opening 2121. That is, the housing 212 is a hollow structure with the opening 2121 at one end, and the end cap 213 covers the opening 2121 of the housing 212 to form a sealed connection, creating a sealed space for accommodating the electrode assembly 22 and the electrolyte.

It should be noted that the wall portion 211 on which the first groove 2113, the second groove 2114, and the scored groove 2115 are provided may be the end cap 213 of the outer shell 21 or one wall of the housing 212 of the outer shell 21. For example, in FIG. 3, the wall portion 211 is the end cap 213. Certainly, the structure of the battery cell 20 is not limited thereto. In other embodiments, the wall portion 211 may alternatively be a bottom wall of the housing 212 disposed opposite to the end cap 213, or the wall portion 211 may be a sidewall of the housing 212 adjacent to and abutting against the end cap 213.

In assembling the battery cell 20, the electrode assembly 22 may first be placed into the housing 212, an electrolyte may be filled into the housing 212, and then the end cap 213 is covered onto the opening 2121 of the housing 212 to complete the assembly of the battery cell 20.

The housing 212 may have various shapes, such as a cylinder, a cuboid, or a prismatic structure. The shape of the housing 212 may be determined based on the specific shape of the electrode assembly 22. For example, if the electrode assembly 22 is a cylindrical structure, the housing 212 of a cylindrical structure may be selected. If the electrode assembly 22 is a cuboidal structure, the housing 212 of a cuboidal structure may be selected. Certainly, the structure of the end cap 213 may also vary. For example, the end cap 213 may be a plate-like structure or a hollow structure with one end open. For example, in FIG. 3, the housing 212 is a cuboidal structure.

Certainly, it can be understood that the outer shell 21 is not limited to the above structure. The outer shell 21 may also be other structures. For example, the outer shell 21 may include a housing 212 and two end caps 213, with the housing 212 being a hollow structure with openings 2121 on two opposite sides, and one end cap 213 corresponding to and covering one opening 2121 of the housing 212 to form a sealed connection, thereby forming a sealed space for accommodating the electrode assembly 22 and the electrolyte. That is, the housing 212 has the openings 2121 formed on two opposite sides, and the two end caps 213 respectively cover the two sides of the housing 212 to seal the corresponding openings 2121.

In some embodiments, the battery cell 20 may further include electrode terminals 23. The electrode terminals 23 are insulatedly installed on the outer shell 21, and the electrode terminals 23 are electrically connected to the electrode assembly 22 to output or input electrical energy of the battery cell 20.

It should be noted that the electrode terminals 23 are insulatedly installed on the outer shell 21, that is, there is no electrical connection formed between the electrode terminals 23 and the outer shell 21.

In FIG. 3, the battery cell 20 includes two electrode terminals 23. Correspondingly, each electrode assembly 22 has two tabs 221, and the two tabs 221 have opposite polarities. The two electrode terminals 23 are respectively electrically connected to the two tabs 221 of the electrode assembly 22 to achieve the input or output of the positive and negative electrodes of the battery cell 20. It should be noted that the tab 221 of the electrode assembly 22 is a component formed by stacking and connecting regions of the positive electrode plate not coated with the positive electrode active material or a component formed by stacking and connecting regions of the negative electrode plate not coated with the negative electrode active material. If the tab 221 is used for output of the positive electrode of the electrode assembly 22, the tab 221 is a component formed by stacking and connecting regions of the positive electrode plate not coated with the positive electrode active material. If the tab 221 is used for output of the negative electrode of the electrode assembly 22, the tab 221 is a component formed by stacking and connecting regions of the negative electrode plate not coated with the negative electrode active material.

For example, the material of the electrode terminals 23 may also vary. For example, the material of the electrode terminals 23 may be copper, iron, aluminum, steel, or aluminum alloy.

The electrode terminals 23 may be installed on the outer shell 21 in various manners. For example, in FIG. 3, two electrode terminals 23 are both installed on the end cap 213 of the outer shell 21. Certainly, the structure of the battery cell 20 is not limited thereto. In other embodiments, two electrode terminals 23 may alternatively be both installed on the housing 212 of the outer shell 21. Similarly, one electrode terminal 23 of the two electrode terminals 23 may be installed on the housing 212 of the outer shell 21, and the other electrode terminal 23 may be installed on the end cap 213 of the outer shell 21.

The outer shell 21 of the battery cell 20 has the wall portion 211, with the first groove 2113 and the second groove 2114 respectively provided on the first surface 2111 and second surface 2112 of the wall portion 211 opposite to each other, the first groove 2113 and the second groove 2114 are disposed opposite to each other along the thickness direction X of the wall portion, and the scored groove 2115 is provided on the bottom surface of the first groove 2113. That is, along the thickness direction X of the wall portion, the first groove 2113 and the second groove 2114 are first respectively provided on two sides of a region of the wall portion 211 intended for the scored groove 2115, enabling the scored groove 2115 to be provided on the bottom surface of the first groove 2113. This can allow the wall portion 211 to be locally thinned before the scored groove 2115 is provided. A battery cell 20 with this structure can, first, reduce the depth required to provide the scored groove 2115 on the wall portion 211 of the outer shell 21, helping to lower the manufacturing difficulty of the scored groove 2115 and the requirements on production devices, thereby reducing manufacturing costs, and can reduce the forming force exerted on the wall portion 211 in processing the scored groove 2115, helping mitigate the risk of cracks in the wall portion 211 and improve the production quality of the battery cell 20. Second, this can improve the morphology of a flow material during the formation of the scored groove 2115, facilitating the flow of the material generated during the formation of the scored groove 2115, thereby enhancing the structural consistency of the scored groove 2115. Furthermore, as compared with a structure with a groove provided on only one side, respectively providing the structures of the first groove 2113 and the second groove 2114 on two sides of the wall portion 211 to reduce the depth of the scored groove 2115 provided on the wall portion 211 of the outer shell 21 can reduce the depth and difficulty of grooving. This ensures that the material displacements in processing the first groove 2113 and the second groove 2114 on two sides of the wall portion 211 are the same, decreasing excessively large material displacement in a case that grooving is performed on only one side of the wall portion 211, thereby reducing processing difficulty and improving the uniformity of material flow in processing the first groove 2113 and second groove 2114.

According to some embodiments of this application, referring to FIG. 3 and FIG. 6, the scored groove 2115 includes a first scored groove segment 2115a and a second scored groove segment 2115b, and the first scored groove segment 2115a and the second scored groove segment 2115b intersect.

The first scored groove segment 2115a and the second scored groove segment 2115b are structures intersecting each other. The structure formed by the intersection of the first scored groove segment 2115a and the second scored groove segment 2115b may be a "V" structure, a "T" structure, or an "X" structure. For example, in FIG. 6, the first scored groove segment 2115a and the second scored groove segment 2115b are perpendicular to each other to form a "T" structure.

Providing the scored groove 2115 with the first scored groove segment 2115a and second scored groove segment 2115b intersecting each other can first increase the pressure relief area of the battery cell 20 to improve the pressure relief speed of the battery cell 20; and second allow the intersection position of the first scored groove segment 2115a and the second scored groove segment 2115b to be weaker and more prone to rupture to release the internal pressure of the battery cell 20.

According to some embodiments of this application, referring to FIG. 3 and FIG. 6, the scored groove 2115 may further include a third scored groove segment 2115c, the third scored groove segment 2115c is spaced apart from the first scored groove segment 2115a, and the second scored groove segment 2115b connects the first scored groove segment 2115a and the third scored groove segment 2115c.

The first scored groove segment 2115a and the third scored groove segment 2115c being spaced apart, and the second scored groove segment 2115b connecting the first scored groove segment 2115a and the third scored groove segment 2115c mean that the second scored groove segment 2115b is located between the first scored groove segment 2115a and the third scored groove segment 2115c, with two ends of the second scored groove segment 2115b both connected to the second scored groove segment 2115b. Certainly, the second scored groove segment 2115b may also extend beyond the first scored groove segment 2115a and the third scored groove segment 2115c in its extension direction.

The second scored groove segment 2115b connects the first scored groove segment 2115a and the third scored groove segment 2115c, enabling the first scored groove segment 2115a, the second scored groove segment 2115b, and the third scored groove segment 2115c to enclose to form at least one opening zone 2116 on the wall portion 211. The first scored groove segment 2115a, the second scored groove segment 2115b, and the third scored groove segment 2115c are provided along the edges of the opening zone 2116, and the opening zone 2116 is configured to open with the first scored groove segment 2115a, the second scored groove segment 2115b, and the third scored groove segment 2115c as boundaries. That is, the wall portion 211 is formed with the opening zone 2116 within a region enclosed by the first scored groove segment 2115a, the second scored groove segment 2115b, and the third scored groove segment 2115c, so that a portion of the wall portion 211 within the opening zone 2116 can open with the first scored groove segment 2115a, the second scored groove segment 2115b, and the third scored groove segment 2115c as boundaries during pressure relief of the battery cell 20, thereby relieving the internal pressure of the battery cell 20.

Optionally, the shape of the scored groove 2115 formed by the first scored groove segment 2115a, the second scored groove segment 2115b, and the third scored groove segment 2115c together may be a "C" structure to form one opening zone 2116 on the wall portion 211. Certainly, the shape of the scored groove 2115 formed by the first scored groove segment 2115a, the second scored groove segment 2115b, and the third scored groove segment 2115c together may be a "Z" structure or an "H" structure to form two opening zones 2116 on the wall portion 211, with the two opening zones 2116 respectively located on two sides of the second scored groove segment 2115b. For example, in FIG. 6, the shape of the scored groove 2115 formed by the first scored groove segment 2115a, the second scored groove segment 2115b, and the third scored groove segment 2115c together is an "H" structure to form two opening zones 2116 on two sides of the second scored groove segment 2115b, respectively.

It should be noted that the depth of the first scored groove segment 2115a, the depth of the second scored groove segment 2115b, and the depth of the third scored groove segment 2115c may all be the same, all different, or pairwise the same. Similarly, the width of the first scored groove segment 2115a, the width of the second scored groove segment 2115b, and the width of the third scored groove segment 2115c may all be the same, all different, or pairwise the same. For example, in FIG. 6, the depth of the first scored groove segment 2115a, the depth of the second scored groove segment 2115b, and the depth of the third scored groove segment 2115c are all the same, and the width of the first scored groove segment 2115a, the width of the second scored groove segment 2115b, and the width of the third scored groove segment 2115c are all the same, which helps reduce the requirements on processing devices, thereby lowering the processing difficulty of the scored groove 2115.

The scored groove 2115 has the first scored groove segment 2115a and the third scored groove segment 2115c that are spaced apart, and the second scored groove segment 2115b connecting the first scored groove segment 2115a and the third scored groove segment 2115c, enabling the wall portion 211 to rupture along the first scored groove segment 2115a, the second scored groove segment 2115b, and the third scored groove segment 2115c during pressure relief of the battery cell 20. This helps further increase the pressure relief area of the battery cell 20, thereby enhancing the pressure relief speed of the battery cell 20.

According to some embodiments of this application, referring to FIG. 6, a connection position between the first scored groove segment 2115a and the second scored groove segment 2115b deviates from two ends of the first scored groove segment 2115a, and a connection position between the third scored groove segment 2115c and the second scored groove segment 2115b deviates from two ends of the third scored groove segment 2115c.

The connection position between the first scored groove segment 2115a and the second scored groove segment 2115b deviating from two ends of the first scored groove segment 2115a means that the second scored groove segment 2115b is connected between the two ends of the first scored groove segment 2115a. Similarly, the connection position between the third scored groove segment 2115c and the second scored groove segment 2115b deviating from two ends of the third scored groove segment 2115c means that the second scored groove segment 2115b is connected between the two ends of the third scored groove segment 2115c, so that the shape of the scored groove 2115 formed by the first scored groove segment 2115a, the second scored groove segment 2115b, and the third scored groove segment 2115c together is a structure approximate to "H". That is, the extension direction of the second scored groove segment 2115b may be set at a non-zero angle with respect to the arrangement direction of the first scored groove segment 2115a and the third scored groove segment 2115c.

With the connection position between the first scored groove segment 2115a and the second scored groove segment 2115b located between the two ends of the first scored groove segment 2115a, and the connection position between the third scored groove segment 2115c and the second scored groove segment 2115b located between the two ends of the third scored groove segment 2115c, two regions of the wall portion 211 that are located on two sides of the second scored groove segment 2115b and that are between the first scored groove segment 2115a and the third scored groove segment 2115c can be opened for pressure relief in an alignment manner during pressure relief of the battery cell 20. This helps further enhance the pressure relief effect of the battery cell 20 and can effectively improve the pressure relief speed of the battery cell 20.

In some embodiments, the first scored groove segment 2115a and the third scored groove segment 2115c are both perpendicular to the second scored groove segment 2115b. That is, the extension direction of the second scored groove segment 2115b is perpendicular to the extension direction of the first scored groove segment 2115a and the extension direction of the third scored groove segment 2115c, so that the shape of the scored groove 2115 formed by the first scored groove segment 2115a, the second scored groove segment 2115b, and the third scored groove segment 2115c together is an "H" structure, and two opening zones 2116 are formed on two sides of the second scored groove segment 2115b. Certainly, the areas of the two opening zones 2116 may be the same or different.

With the first scored groove segment 2115a and the third scored groove segment 2115c disposed perpendicular to the second scored groove segment 2115b, the extension direction of the second scored groove segment 2115b is the arrangement direction of the first scored groove segment 2115a and the third scored groove segment 2115c. First, this enhances the regularity of the shape of the scored groove 2115, helping reduce the processing difficulty of the scored groove 2115 and lower the manufacturing costs of the battery cell 20. Second, this facilitates pressure-relief-based aligned opening of the two regions of the wall portion 211 that are located on two sides of the second scored groove segment 2115b and that are between the first scored groove segment 2115a and the third scored groove segment 2115c during pressure relief of the battery cell 20.

In some embodiments, the connection position between the first scored groove segment 2115a and the second scored groove segment 2115b is located at a midpoint of the first scored groove segment 2115a; and/or the connection position between the third scored groove segment 2115c and the second scored groove segment 2115b is located at a midpoint of the third scored groove segment 2115c.

For example, in FIG. 6, the connection position between the first scored groove segment 2115a and the second scored groove segment 2115b is located at the midpoint of the first scored groove segment 2115a, and the connection position between the third scored groove segment 2115c and the second scored groove segment 2115b is located at the midpoint of the third scored groove segment 2115c, forming two opening zones 2116 with the same area on two sides of the second scored groove segment 2115b.

With the connection position between the first scored groove segment 2115a and the second scored groove segment 2115b set at the midpoint of the first scored groove segment 2115a, and/or the connection position between the third scored groove segment 2115c and the second scored groove segment 2115b set at the midpoint of the third scored groove segment 2115c, the following phenomenon can be mitigated: a significant large area difference between the two regions of the wall portion 211 that are located on both sides of the second scored groove segment 2115b and that are between the first scored groove segment 2115a and the third scored groove segment 2115c, so that similar forces are required to open in an alignment manner the two regions of the wall portion 211 that are located on both sides of the second scored groove segment 2115b and that are between the first scored groove segment 2115a and the third scored groove segment 2115c during pressure relief of the battery cell 20, thereby facilitating pressure relief of the battery cell 20.

According to some embodiments of this application, referring to FIG. 3 and FIG. 6, the first groove 2113 may include a first groove segment 2113a, a second groove segment 2113b, and a third groove segment 2113c, the first groove segment 2113a and the third groove segment 2113c are spaced apart, and the second groove segment 2113b connects the first groove segment 2113a and the third groove segment 2113c. The first scored groove segment 2115a is provided on a bottom surface of the first groove segment 2113a, the second scored groove segment 2115b is provided on a bottom surface of the second groove segment 2113b, and the third scored groove segment 2115c is provided on a bottom surface of the third groove segment 2113c.

The first scored groove segment 2115a is correspondingly provided on the bottom surface of the first groove segment 2113a, with the extension direction of the first scored groove segment 2115a being the same as the extension direction of the first groove segment 2113a, the second scored groove segment 2115b is correspondingly provided on the bottom surface of the second groove segment 2113b, with the extension direction of the second scored groove segment 2115b being the same as the extension direction of the second groove segment 2113b, and similarly, the third scored groove segment 2115c is correspondingly provided on the bottom surface of the third groove segment 2113c, with the extension direction of the third scored groove segment 2115c being the same as the extension direction of the third groove segment 2113c, so that the shape of the region of the first groove 2113 intended for the scored groove 2115 is the same as the shape of the scored groove 2115.

It should be noted that the depths of the first groove segment 2113a, the second groove segment 2113b, and the third groove segment 2113c may all be the same, all different, or pairwise the same, and similarly, the widths of the first groove segment 2113a, the second groove segment 2113b, and the third groove segment 2113c may all be the same, all different, or pairwise the same. For example, in FIG. 6, the depths of the first groove segment 2113a, the second groove segment 2113b, and the third groove segment 2113c are all the same, and the widths of the first groove segment 2113a, the second groove segment 2113b, and the third groove segment 2113c are all the same, which helps reduce the requirements on processing devices, thereby lowering the processing difficulty of the first groove 2113.

The first groove 2113 is provided with the first groove segment 2113a, the second groove segment 2113b, and the third groove segment 2113c, and the first scored groove segment 2115a, the second scored groove segment 2115b, and the third scored groove segment 2115c of the scored groove 2115 are correspondingly provided on the bottom surfaces of the first groove segment 2113a, the second groove segment 2113b, and the third groove segment 2113c, respectively. Thus, with the first groove 2113, only a local portion of the wall portion 211 intended for the scored groove 2115 needs to be thinned, which helps reduce the processing difficulty of the first groove 2113 and reduce the processing range of the first groove 2113.

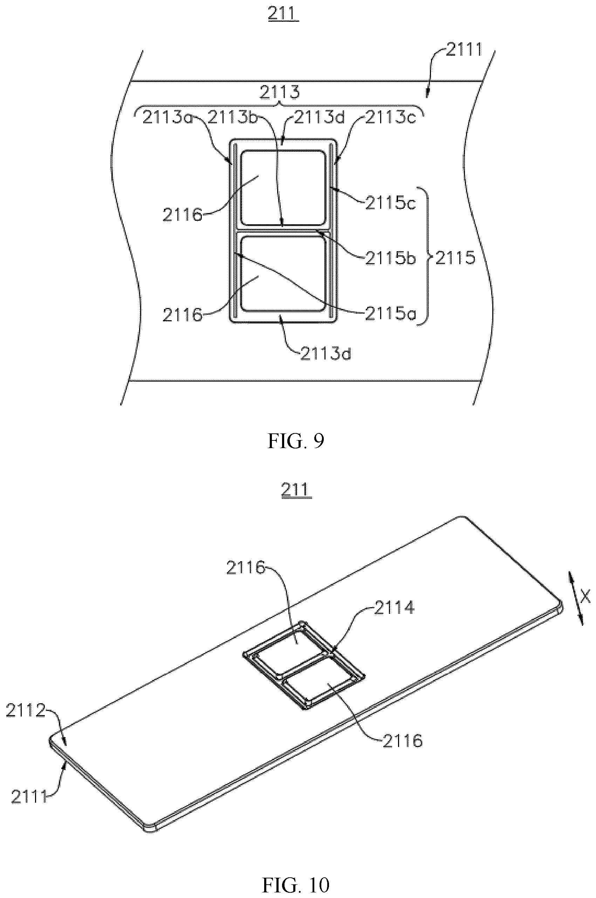

According to some embodiments of this application, referring to FIG. 8 and FIG. 9, FIG. 8 is a schematic structural diagram of the wall portion 211 of the outer shell 21 provided by some other embodiments of this application, and FIG. 9 is a partial schematic structural diagram of the wall portion 211 of the outer shell 21 facing towards the first surface 2111 provided by some other embodiments of this application. The first groove 2113 may further include a fourth groove segment 2113d, the fourth groove segment 2113d connects the first groove segment 2113a and the third groove segment 2113c, and along an extension direction of the first groove segment 2113a, the fourth groove segment 2113d is spaced apart from the second groove segment 2113b.

The fourth groove segment 2113d of the first groove 2113 has two ends respectively connected to the first groove segment 2113a and the third groove segment 2113c, and the fourth groove segment 2113d is spaced apart from the second groove segment 2113b, enabling the opening zone 2116 to flip with the position of the fourth groove segment 2113d as an axis to open for pressure relief.

Optionally, the fourth groove segment 2113d may be located within the opening zone 2116, that is, the connection position of the fourth groove segment 2113d with the first groove segment 2113a deviates from an end portion of the first groove segment 2113a, and the connection position of the fourth groove segment 2113d with the third groove segment 2113c deviates from an end portion of the third groove segment 2113c. Certainly, the fourth groove segment 2113d may alternatively be located at an edge of the opening zone 2116, that is, the opening zone 2116 is located between the fourth groove segment 2113d and the second groove segment 2113b. In other words, the fourth groove segment 2113d is connected to an end of the first groove segment 2113a, and the fourth groove segment 2113d is connected to an end of the third groove segment 2113c.

For example, the depth of the fourth groove segment 2113d is the same as the depth of the first groove segment 2113a and the depth of the third groove segment 2113c, and the width of the fourth groove segment 2113d is the same as the width of the first groove segment 2113a and the width of the third groove segment 2113c, enabling the fourth groove segment 2113d to be processed simultaneously with the processing of the first groove segment 2113a and the third groove segment 2113c. First, this helps reduce the processing difficulty of the first groove 2113, and second, this helps improve the processing efficiency of the first groove 2113.

The first groove 2113 is further provided with the fourth groove segment 2113d connected to the first groove segment 2113a and the third groove segment 2113c, and the fourth groove segment 2113d is spaced apart from the second groove segment 2113b along the extension direction of the first groove segment 2113a. This allows the wall portion 211 to rupture along the first scored groove segment 2115a, the second scored groove segment 2115b, and the third scored groove segment 2115c during pressure relief of the battery cell 20, and allows the region of the wall portion 211 located among the first scored groove segment 2115a, the second scored groove segment 2115b, and the third scored groove segment 2115c to flip with the position of the fourth groove segment 2113d as an axis, allowing for easier opening for pressure relief.

In some embodiments, referring to FIG. 9, two ends of the fourth groove segment 2113d are respectively connected to one end of the first groove segment 2113a and one end of the third groove segment 2113c. That is, the fourth groove segment 2113d is located at the edge of the opening zone 2116, so that the opening zone 2116 is located between the fourth groove segment 2113d and the second groove segment 2113b.

Connecting the two ends of the fourth groove segment 2113d to one end of the first groove segment 2113a and one end of the third groove segment 2113c, respectively increases the area of the region of the wall portion 211 located between the fourth groove segment 2113d and the second groove segment 2113b. This helps increase the difficulty of flipping the region of the wall portion 211 that is among the first scored groove segment 2115a, the second scored groove segment 2115b, and the third scored groove segment 2115c and that flips with the position of the fourth groove segment 2113d as an axis, and helps increase the pressure relief area of the battery cell 20.

In some embodiments, referring to FIG. 8 and FIG. 9, the first groove 2113 may include two fourth groove segments 2113d, and along the extension direction of the first groove segment 2113a, the second groove segment 2113b is located between the two fourth groove segments 2113d.

Along the extension direction of the first groove segment 2113a, the two fourth groove segments 2113d are respectively located on two sides of the second groove segment 2113b, enabling the two opening zones 2116 located on two sides of the second groove segment 2113b to flip with the positions of the corresponding fourth groove segments 2113d as axes, thereby facilitating opening of the two opening zones 2116 in an alignment manner for pressure relief.

For example, the two fourth groove segments 2113d are respectively connected to two ends of the first groove segment 2113a, and the two fourth groove segments 2113d are respectively connected to two ends of the third groove segment 2113c, that is, the two fourth groove segments 2113d are respectively located at the edges of the corresponding opening zones 2116, so that the two opening zones 2116 are respectively located between the second groove segment 2113b and the corresponding fourth groove segments 2113d, making the first groove 2113 a structure taking the form of "two stacked rectangles".

The first groove 2113 has the two fourth groove segments 2113d, and along the extension direction of the first groove segment 2113a, the two fourth groove segments 2113d are respectively located on two sides of the second groove segment 2113b. This enables the two regions of the wall portion 211 that are located on both sides of the second scored groove segment 2115b and that are between the first scored groove segment 2115a and the third scored groove segment 2115c to flip with the positions of the corresponding fourth groove segments 2113d as axes during aligned opening, improving the effects of aligned opening and allowing for easier opening for pressure relief.

According to some embodiments of this application, referring to FIG. 4 and FIG. 7, the second groove 2114 may include a fifth groove segment 2114a, a sixth groove segment 2114b, and a seventh groove segment 2114c, the fifth groove segment 2114a and the seventh groove segment 2114c are spaced apart, and the sixth groove segment 2114b connects the fifth groove segment 2114a and the seventh groove segment 2114c. Along the thickness direction X of the wall portion, the fifth groove segment 2114a is provided opposite the first groove segment 2113a, the sixth groove segment 2114b is provided opposite the second groove segment 2113b, and the seventh groove segment 2114c is provided opposite the third groove segment 2113c.

Along the thickness direction X of the wall portion, the fifth groove segment 2114a is provided opposite the first groove segment 2113a, with the extension direction of the fifth groove segment 2114a being the same as the extension direction of the first groove segment 2113a, the sixth groove segment 2114b is provided opposite the second groove segment 2113b, with the extension direction of the sixth groove segment 2114b being the same as the extension direction of the second groove segment 2113b, and similarly, the seventh groove segment 2114c is provided opposite the third groove segment 2113c, with the extension direction of the seventh groove segment 2114c being the same as the extension direction of the third groove segment 2113c, so that the second groove 2114 and the first groove 2113 are provided opposite along the thickness direction X of the wall portion and have the same shape. That is, along the thickness direction X of the wall portion, a projection of the scored groove 2115 is located within the second groove 2114.

It should be noted that the depths of the fifth groove segment 2114a, the sixth groove segment 2114b, and the seventh groove segment 2114c may all be the same, all different, or pairwise the same, and similarly, the widths of the fifth groove segment 2114a, the sixth groove segment 2114b, and the seventh groove segment 2114c may all be the same, all different, or pairwise the same. For example, in FIG. 6, the depths of the fifth groove segment 2114a, the sixth groove segment 2114b, and the seventh groove segment 2114c are all the same, and the widths of the fifth groove segment 2114a, the sixth groove segment 2114b, and the seventh groove segment 2114c are all the same, which helps reduce the requirements on processing devices, thereby lowering the processing difficulty of the second groove 2114.

The second groove 2114 is provided with the fifth groove segment 2114a, the sixth groove segment 2114b, and the seventh groove segment 2114c, and the fifth groove segment 2114a, the sixth groove segment 2114b, and the seventh groove segment 2114c are respectively provided opposite the first groove segment 2113a, the second groove segment 2113b, and the third groove segment 2113c of the first groove 2113 along the thickness direction X of the wall portion. Thus, with the first groove 2113 and the second groove 2114, local thinning needs to be performed only on two sides of the part of the wall portion 211 intended for the scored groove 2115, which helps reduce the processing difficulty of the second groove 2114 and reduces the processing range of the second groove 2114.

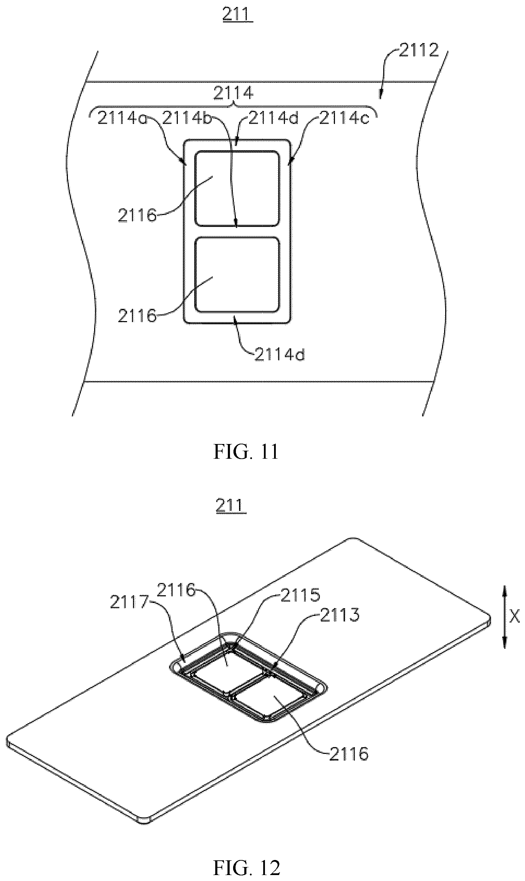

According to some embodiments of this application, referring to FIG. 10 and FIG. 11, FIG. 10 is a schematic structural diagram of the wall portion 211 of the outer shell 21 provided by some further embodiments of this application, and FIG. 11 is a partial schematic structural diagram of the wall portion 211 of the outer shell 21 facing towards the second surface 2112 provided by some further embodiments of this application. The second groove 2114 may further include an eighth groove segment 2114d, the eighth groove segment 2114d connects the fifth groove segment 2114a and the seventh groove segment 2114c, and along an extension direction of the fifth groove segment 2114a, the eighth groove segment 2114d is spaced apart from the sixth groove segment 2114b.

The eighth groove segment 2114d of the second groove 2114 has two ends respectively connected to the fifth groove segment 2114a and the seventh groove segment 2114c, and the eighth groove segment 2114d is spaced apart from the sixth groove segment 2114b, enabling the opening zone 2116 to flip with the position of the eighth groove segment 2114d as an axis to open for pressure relief.

Optionally, the eighth groove segment 2114d may be located within the opening zone 2116, that is, the connection position of the eighth groove segment 2114d with the fifth groove segment 2114a deviates from an end portion of the fifth groove segment 2114a, and the connection position of the eighth groove segment 2114d with the seventh groove segment 2114c deviates from an end portion of the seventh groove segment 2114c. Certainly, the eighth groove segment 2114d may also be located at the edge of the opening zone 2116, that is, the opening zone 2116 is located between the eighth groove segment 2114d and the sixth groove segment 2114b. In other words, the eighth groove segment 2114d is connected to an end of the fifth groove segment 2114a, and the eighth groove segment 2114d is connected to an end of the seventh groove segment 2114c.

For example, the depth of the eighth groove segment 2114d is the same as the depth of the fifth groove segment 2114a and the depth of the seventh groove segment 2114c, and the width of the eighth groove segment 2114d is the same as the width of the fifth groove segment 2114a and the width of the seventh groove segment 2114c, enabling the eighth groove segment 2114d to be processed simultaneously with the processing of the fifth groove segment 2114a and the seventh groove segment 2114c. First, this helps reduce the processing difficulty of the second groove 2114, and second, this helps improve the processing efficiency of the second groove 2114.

It should be noted that in an embodiment where the second groove 2114 has the eighth groove segment 2114d, the first groove 2113 may be provided with the fourth groove segment 2113d or may not be provided with the fourth groove segment 2113d. Similarly, in an embodiment where the first groove 2113 has the fourth groove segment 2113d, the second groove 2114 may be provided with the eighth groove segment 2114d or may not be provided with the eighth groove segment 2114d. In the embodiments of this application, the first groove 2113 is provided with the fourth groove segment 2113d, and the second groove 2114 is provided with the eighth groove segment 2114d at a position corresponding to the fourth groove segment 2113d along the thickness direction X of the wall portion.

The second groove 2114 further has the eighth groove segment 2114d connected to the fifth groove segment 2114a and the seventh groove segment 2114c, and the eighth groove segment 2114d is spaced apart from the sixth groove segment 2114b along the extension direction of the fifth groove segment 2114a. This allows the wall portion 211 to rupture along the first scored groove segment 2115a, the second scored groove segment 2115b, and the third scored groove segment 2115c during pressure relief of the battery cell 20, and allows the region of the wall portion 211 located among the first scored groove segment 2115a, the second scored groove segment 2115b, and the third scored groove segment 2115c to flip with the position of the eighth groove segment 2114d as an axis, allowing for easier opening for pressure relief.

In some embodiments, referring to FIG. 11, two ends of the eighth groove segment 2114d are respectively connected to one end of the fifth groove segment 2114a and one end of the seventh groove segment 2114c. That is, the eighth groove segment 2114d is located at the edge of the opening zone 2116, so that the opening zone 2116 is located between the eighth groove segment 2114d and the sixth groove segment 2114b.

Connecting the two ends of the eighth groove segment 2114d to one end of the fifth groove segment 2114a and one end of the seventh groove segment 2114c, respectively increases the area of the region of the wall portion 211 located between the eighth groove segment 2114d and the sixth groove segment 2114b. This helps increase the difficulty of flipping the region of the wall portion 211 that is among the first scored groove segment 2115a, the second scored groove segment 2115b, and the third scored groove segment 2115c and that flips with the position of the eighth groove segment 2114d as an axis, and helps increase the pressure relief area of the battery cell 20.

In some embodiments, referring to FIG. 10 and FIG. 11, the second groove 2114 may include two eighth groove segments 2114d, and along the extension direction of the fifth groove segment 2114a, the sixth groove segment 2114b is located between the two eighth groove segments 2114d.

Along the extension direction of the fifth groove segment 2114a, the two eighth groove segments 2114d are respectively located on two sides of the sixth groove segment 2114b, enabling the two opening zones 2116 located on two sides of the sixth groove segment 2114b to flip with the positions of the corresponding eighth groove segments 2114d as axes, thereby facilitating aligned opening of the two opening zones 2116 for pressure relief.

For example, the two eighth groove segments 2114d are respectively connected to two ends of the fifth groove segment 2114a, and the two eighth groove segments 2114d are respectively connected to two ends of the seventh groove segment 2114c, that is, the two eighth groove segments 2114d are respectively located at the edges of the corresponding opening zones 2116, so that the two opening zones 2116 are respectively located between the sixth groove segment 2114b and the corresponding eighth groove segments 2114d, making the second groove 2114 a structure taking the form of "two stacked rectangles". In the embodiments of this application, both the first groove 2113 and the second groove 2114 are structures taking the form of "two stacked rectangles", and the first groove 2113 and the second groove 2114 are provided opposite each other along the thickness direction X of the wall portion, so that projections of the first groove 2113 and the second groove 2114 along the thickness direction X of the wall portion overlap.

The second groove 2114 has the two eighth groove segments 2114d, and along the extension direction of the fifth groove segment 2114a, the two eighth groove segments 2114d are respectively located on two sides of the sixth groove segment 2114b. This enables the two regions of the wall portion 211 that are located on two sides of the second scored groove segment 2115b and that are located between the first scored groove segment 2115a and the third scored groove segment 2115c to flip with the positions of the corresponding eighth groove segments 2114d as axes during aligned opening, improving the effects of aligned opening and allowing for easier opening for pressure relief.

According to some embodiments of this application, referring to FIG. 4 and FIG. 5, along the thickness direction X of the wall portion, a depth of the first groove 2113 is H₁, and a depth of the second groove 2114 is H₂, satisfying 0.2 ≤ H₁/H₂ ≤ 5.

0.2 ≤ H₁/H₂ ≤ 5, that is, the ratio of the depth of the first groove 2113 to the depth of the second groove 2114 is within 5 times.

For example, the depth of the first groove 2113 may be 0.2 times, 0.3 times, 0.5 times, 0.8 times, 1 time, 1.2 times, 1.5 times, 2 times, 3 times, 4 times, or 5 times the depth of the second groove 2114.

Preferably, the depth H₁ of the first groove 2113 is equal to the depth H₂ of the second groove 2114, that is, H₁/H₂ = 1.

In some embodiments, along the thickness direction X of the wall portion, the depth of the first groove 2113 is H₁, satisfying H₁ ≥ 0.1 mm. Setting the depth of the first groove 2113 along the thickness direction X of the wall portion to be greater than or equal to 0.1 mm can mitigate the phenomenon that an excessively shallow depth of the first groove 2113 results in poor thinning of the portion of the wall portion 211 intended for the scored groove 2115, and can mitigate the excessively large processing difficulty of the first groove 2113 caused by an excessively shallow depth of the first groove 2113.

For example, the depth of the first groove 2113 along the thickness direction X of the wall portion may be 0.1 mm, 0.2 mm, 0.5 mm, 0.8 mm, 1 mm, 1.2 mm, 1.5 mm, 1.8 mm, 2 mm, or 2.2 mm.

In some embodiments, along the thickness direction X of the wall portion, the depth of the second groove 2114 is H₂, satisfying H₂ ≥ 0.1 mm. Setting the depth of the second groove 2114 along the thickness direction X of the wall portion to be greater than or equal to 0.1 mm can mitigate the phenomenon that an excessively shallow depth of the second groove 2114 results in poor thinning of the portion of the wall portion 211 intended for the scored groove 2115, and can mitigate the excessively large processing difficulty of the second groove 2114 caused by an excessively shallow depth of the second groove 2114.

For example, the depth of the second groove 2114 along the thickness direction X of the wall portion may be 0.1 mm, 0.2 mm, 0.5 mm, 0.8 mm, 1 mm, 1.2 mm, 1.5 mm, 1.8 mm, 2 mm, or 2.2 mm.

Setting the depth of the first groove 2113 along the thickness direction X of the wall portion to be 0.2 to 5 times the depth of the second groove 2114 along the thickness direction X of the wall portion mitigates the poor morphology of a flow material during the formation of the scored groove 2115 caused by an excessive deviation between the depths of the first groove 2113 and the second groove 2114. This facilitates the flow of the material generated during the formation of the scored groove 2115 in the wall portion 211, further enhancing the structural consistency of the scored groove 2115.

According to some embodiments of this application, referring to FIG. 5, along the thickness direction X of the wall portion, a distance between the bottom surface of the first groove 2113 and the bottom surface of the second groove 2114 is L, satisfying 0.3 mm ≤ L ≤ 1 mm.

The distance between the bottom surface of the first groove 2113 and the bottom surface of the second groove 2114 is L, that is, the thickness of the region of the wall portion 211 intended for the scored groove 2115 after the first groove 2113 and the second groove 2114 are provided is L. In other words, the residual thickness of the wall portion 211 after the first groove 2113 and the second groove 2114 are provided is L.

0.3 mm ≤ L ≤ 1 mm means that the thickness of the region of the wall portion 211 intended for the scored groove 2115 after the first groove 2113 and the second groove 2114 are provided is 0.3 mm to 1 mm.

For example, the distance L between the bottom surface of the first groove 2113 and the bottom surface of the second groove 2114 may be 0.3 mm, 0.35 mm, 0.4 mm, 0.45 mm, 0.5 mm, 0.6 mm, 0.7 mm, 0.8 mm, 0.9 mm, or 1 mm.

Setting the distance between the bottom surface of the first groove 2113 and the bottom surface of the second groove 2114 along the thickness direction X of the wall portion to 0.3 mm to 1 mm can first mitigate the insufficient strength of the portion of the wall portion 211 intended for the scored groove 2115 caused by an excessively small thickness, thereby reducing the risk of fracture of the wall portion 211 in providing the scored groove 2115. Second, this can mitigate the excessively large processing difficulty of the scored groove 2115 caused by the excessively large thickness and mitigate poor morphology of a flow material during formation of the scored groove 2115, thereby improving the processing quality of the scored groove 2115.

It should be noted that in some embodiments, the first groove 2113 is a stepped groove provided along the thickness direction X of the wall portion, and/or the second groove 2114 is a stepped groove provided along the thickness direction X of the wall portion.

The first groove 2113 is a stepped groove provided along the thickness direction X of the wall portion, that is, the first groove 2113 is a multi-level groove structure, and the multi-level groove of the first groove 2113 is arranged along the thickness direction X of the wall portion. For example, the first groove 2113 may be a two-level groove, a three-level groove, or a four-level groove.

The second groove 2114 is a stepped groove provided along the thickness direction X of the wall portion, that is, the second groove 2114 is a multi-level groove structure, and the multi-level groove of the second groove 2114 is arranged along the thickness direction X of the wall portion. For example, the second groove 2114 may be a two-level groove, a three-level groove, or a four-level groove.

With the first groove 2113 disposed as a stepped groove structure, the first groove 2113 is a structure undergoing multiple times of processing, reducing the depth of each individual processing of the first groove 2113, thereby lowering processing difficulty and reducing the forming force exerted on the wall portion 211 in processing the first groove 2113. This helps mitigate the risk of cracks in the wall portion 211. Similarly, with the second groove 2114 disposed as a stepped groove structure, the second groove 2114 is a structure undergoing multiple times of processing, reducing the depth of each individual processing of the second groove 2114, thereby lowering processing difficulty and reducing the forming force exerted on the wall portion 211 in processing the second groove 2114. This helps mitigate the risk of cracks in the wall portion 211.

According to some embodiments of this application, referring to FIG. 5, a width of the first groove 2113 is W₁, satisfying 0.5 mm ≤ W₁ ≤ 10 mm; and/or a width of the second groove 2114 is W₂, satisfying 0.5 mm ≤ W₂ ≤ 10 mm.

The width W₁ of the first groove 2113 is the width of the bottom surface of the first groove 2113. It should be noted that when the first groove 2113 is a stripe groove or an annular groove, the width W₁ of the first groove 2113 is the dimension of the bottom surface of the first groove 2113 in a direction perpendicular to the extension direction of the first groove 2113. When the first groove 2113 is an "H" shaped groove, a "V" shaped groove, or a groove taking the form of "two stacked rectangles", the width W₁ of the first groove 2113 is the width of the bottom surface of each groove segment of the first groove 2113.

Similarly, the width W₂ of the second groove 2114 is the width of the bottom surface of the second groove 2114. It should be noted that when the second groove 2114 is a stripe groove or an annular groove, the width W₂ of the second groove 2114 is the dimension of the bottom surface of the second groove 2114 in a direction perpendicular to the extension direction of the second groove 2114. When the second groove 2114 is an "H" shaped groove, a "V" shaped groove, or a groove taking the form of "two stacked rectangles", the width W₂ of the second groove 2114 is the width of the bottom surface of each groove segment of the second groove 2114.

In some embodiments, the width of the first groove 2113 is W₁, satisfying 1 mm ≤ W₁ ≤ 3 mm.

For example, the width W₁ of the first groove 2113 may be 1 mm, 1.2 mm, 1.5 mm, 1.8 mm, 2 mm, 2.2 mm, 2.5 mm, 2.8 mm, or 3 mm.

In some embodiments, the width of the second groove 2114 is W₂, satisfying 1 mm ≤ W₂ ≤ 3 mm.

For example, the width W₂ of the second groove 2114 may be 1 mm, 1.2 mm, 1.5 mm, 1.8 mm, 2 mm, 2.2 mm, 2.5 mm, 2.8 mm, or 3 mm.

Setting the width of the first groove 2113 to 0.5 mm to 10 mm can first mitigate the phenomenon that a region on the bottom surface of the first groove 2113 intended for the scored groove 2115 is too small due to an excessively small width of the first groove 2113, thereby increasing the width of the region intended for the scored groove 2115. This can allow the region of the wall portion 211 provided with the first groove 2113 to act as a deformation buffer when the battery cell 20 is impacted, reducing damage to the scored groove 2115, and can facilitate material flow in processing the scored groove 2115, enhancing the consistency of the scored groove 2115. Second, this can mitigate the phenomenon that an excessively large width of the first groove 2113 results in an excessively large processing range and reduction in the overall structural strength of the wall portion 211. Similarly, setting the width of the second groove 2114 to 0.5 mm to 10 mm can first mitigate the phenomenon that a region on the bottom surface, of the second groove 2114 corresponding to the first groove 2113, intended for the scored groove 2115 is too small due to an excessively small width of the second groove 2114, thereby increasing the width of the region intended for the scored groove 2115. This can allow the region of the wall portion 211 provided with the second groove 2114 to act as a deformation buffer when the battery cell 20 is impacted, reducing damage to the scored groove 2115, and can facilitate material flow in processing the scored groove 2115, enhancing the consistency of the scored groove 2115. Second, this can mitigate the phenomenon that an excessively large width of the second groove 2114 results in an excessively large processing range and reduction in the overall structural strength of the wall portion 211.

According to some embodiments of this application, referring to FIG. 3 and FIG. 4, along the thickness direction X of the wall portion, the first surface 2111 is provided facing away from the interior of the outer shell 21.

The first surface 2111 being provided facing away from the interior of the outer shell 21 means that the first surface 2111 is provided facing away from the electrode assembly 22, that is, the first groove 2113 and the scored groove 2115 are provided on a side of the wall portion 211 facing away from the electrode assembly 22. Certainly, in other embodiments, the first groove 2113 and the scored groove 2115 may alternatively be provided on a side of the wall portion 211 facing towards the interior of the outer shell 21.

The first surface 2111 is the surface of the wall portion 211 facing away from the interior of the outer shell 21, so that the scored groove 2115 is provided on the side of the wall portion 211 facing away from the interior of the outer shell 21. This helps reduce the processing difficulty of the scored groove 2115, facilitating the formation of the scored groove 2115 on the wall portion 211.

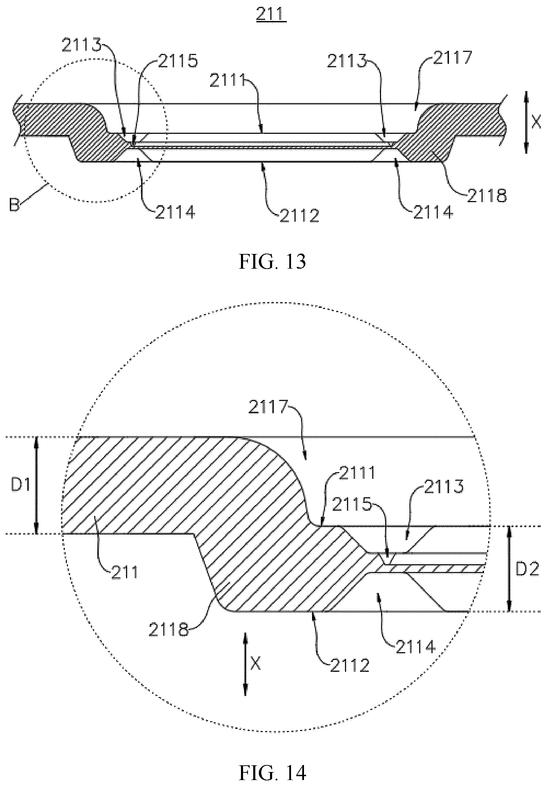

According to some embodiments of this application, referring to FIG. 12, FIG. 13, and FIG. 14, FIG. 12 is a schematic structural diagram of the wall portion 211 of the outer shell 21 provided by some other embodiments of this application, FIG. 13 is a partial cross-sectional view of the wall portion 211 of the outer shell 21 provided by some other embodiments of this application, and FIG. 14 is a partial enlarged view of portion B of the wall portion 211 of the outer shell 21 shown in FIG. 13. Along the thickness direction X of the wall portion, a sunken groove 2117 is provided on a side of the wall portion 211 facing away from an interior of the outer shell 21, and two opposite surfaces of a bottom wall of the sunken groove 2117 are the first surface 2111 and the second surface 2112, respectively.

The sunken groove 2117 being provided on a side of the wall portion 211 facing away from the interior of the outer shell 21 means that the wall portion 211 is recessed on the side facing away from the electrode assembly 22 to form the sunken groove 2117.

Two opposite surfaces of the bottom wall of the sunken groove 2117 are the first surface 2111 and the second surface 2112, that is, the first groove 2113 and the second groove 2114 are respectively provided on two sides of the bottom wall of the sunken groove 2117 along the thickness direction X of the wall portion. In other words, the scored groove 2115 is provided on the bottom surface of the sunken groove 2117 or on a surface of the bottom wall of the sunken groove 2117 facing towards the electrode assembly 22.

For example, in FIG. 13 and FIG. 14, the first surface 2111 is provided facing away from the interior of the outer shell 21, that is, the first surface 2111 is the bottom surface of the sunken groove 2117, so that the first groove 2113 is provided on the bottom surface of the sunken groove 2117. Certainly, in other embodiments, the bottom surface of the sunken groove 2117 may alternatively be the second surface 2112, that is, the second groove 2114 is provided on the bottom surface of the sunken groove 2117.

It should be noted that in some embodiments, referring to FIG. 4 and FIG. 5, the wall portion 211 may not be provided with the sunken groove 2117, that is, the first groove 2113 and the second groove 2114 are directly provided on two sides of the wall portion 211 along the thickness direction X of the wall portion. In other words, the surfaces on two sides of the wall portion 211 along the thickness direction X of the wall portion are the first surface 2111 and the second surface 2112, respectively.

The sunken groove 2117 is provided on the side of the wall portion 211 facing away from the interior of the outer shell 21, with the two opposite surfaces of the bottom wall of the sunken groove 2117 being the first surface 2111 and the second surface 2112 along the thickness direction X of the wall portion. That is, the first groove 2113 and the second groove 2114 are respectively provided on two sides of the bottom wall of the sunken groove 2117 along the thickness direction X of the wall portion, so that the sunken groove 2117 can provide a certain protective effect to the region of the wall portion 211 provided with the scored groove 2115, reducing wear or damage to the region of the wall portion 211 provided with the scored groove 2115 caused under the action of external environments, thereby helping improve the service life of the battery cell 20.

In some embodiments, referring to FIG. 13 and FIG. 14, along the thickness direction X of the wall portion, a protrusion 2118 is formed on a side of the wall portion 211 facing towards the interior of the outer shell 21 and at a position corresponding to the sunken groove 2117.

For example, the sunken groove 2117 provided on the wall portion 211 is formed by a stamping process to form the sunken groove 2117 on the side of the wall portion 211 facing away from the interior of the outer shell 21, and the protrusion 2118 is formed on the side of the wall portion 211 facing towards the interior of the outer shell 21 at a position corresponding to the sunken groove 2117. Certainly, the processing manner of the sunken groove 2117 provided on the wall portion 211 is not limited thereto. In other embodiments, the sunken groove 2117 provided on the wall portion 211 may alternatively be formed by processing techniques such as laser etching, engraving, or casting.

Along the thickness direction X of the wall portion, the thickness of the wall portion 211 is D₁, and the thickness of the bottom wall of the sunken groove 2117 is D₂, satisfying D₁ - D₂ ≤ 1 mm. That is, after the wall portion 211 is stamped to form the sunken groove 2117, the difference obtained by subtracting the thickness of the bottom wall of the sunken groove 2117 from the thickness of the wall portion 211 is less than 1 mm.

For example, along the thickness direction X of the wall portion, the difference obtained by subtracting the thickness of the bottom wall of the sunken groove 2117 from the thickness of the wall portion 211 may be 1 mm, 0.8 mm, 0.7 mm, 0.6 mm, 0.5 mm, 0.3 mm, 0.2 mm, 0.1 mm, or 0 mm. Preferably, the thickness of the wall portion 211 is equal to the thickness of the bottom wall of the sunken groove 2117, that is, the difference obtained by subtracting the thickness of the bottom wall of the sunken groove 2117 from the thickness of the wall portion 211 is 0 mm, which helps enhance the structural strength of the bottom wall of the sunken groove 2117.

With the protrusion 2118 formed on the side of the wall portion 211 facing away from the sunken groove 2117 and at a position corresponding to the sunken groove 2117, the sunken groove 2117 of the wall portion 211 is a concave-convex structure formed by a stamping process, enabling the sunken groove 2117 and the protrusion 2118 to be formed on two sides of the wall portion 211, respectively. First, a wall portion 211 with this structure is easy to manufacture and helps reduce the processing difficulty of forming the sunken groove 2117 on the wall portion 211, thereby effectively improving the processing efficiency of the sunken groove 2117. Second, it can effectively enhance the structural strength of the bottom wall of the sunken groove 2117, mitigating the risk of deformation or fracture when the first groove and the second groove are provided on two sides of the bottom wall of the sunken groove 2117, thereby helping improve the production quality of the battery cell 20.

According to some embodiments of this application, referring to FIG. 3, the outer shell 21 includes a housing 212 and an end cap 213. An accommodation cavity with an opening 2121 is formed within the housing 212, and the accommodation cavity is configured to accommodate an electrode assembly 22. The end cap 213 seals the opening 2121, and the end cap 213 is the wall portion 211.

The end cap 213 is the wall portion 211, that is, the first groove 2113 and the second groove 2114 are respectively provided on two sides of the end cap 213 along the thickness direction of the end cap 213. Similarly, the scored groove 2115 is provided on the end cap 213.

The wall portion 211 of the outer shell 21 is the end cap 213 of the outer shell 21 configured to seal the opening 2121 of the housing 212. A battery cell 20 with this structure is beneficial to providing the first groove and the second groove on the end cap 213 and facilitates the forming of the scored groove 2115 on the bottom surface of the first groove. This can effectively reduce the processing difficulty of providing the first groove, the second groove, and the scored groove 2115 on the outer shell 21 of the battery cell 20, thereby improving the production efficiency of the battery cell 20.

It should be noted that the structure of the battery cell 20 is not limited thereto. In some embodiments, the battery cell 20 may alternatively be other structures. For example, the outer shell 21 includes a housing 212 and an end cap 213. The housing 212 includes an integrally formed sidewall and the wall portion 211, the sidewall surrounds a periphery of the wall portion 211, along the thickness direction X of the wall portion, one end of the sidewall is connected to the wall portion 211, the other end encloses to form an opening 2121, and the sidewall and the wall portion 211 together define an accommodation cavity configured to accommodate an electrode assembly 22. The end cap 213 seals the opening 2121. That is, the wall portion 211 is a bottom wall of the housing 212 disposed opposite to the end cap 213 along the thickness direction X of the wall portion. In other words, the first groove 2113 and the second groove 2114 are respectively provided on two sides of the bottom wall of the housing 212. Similarly, the scored groove 2115 is provided on the bottom wall of the housing 212.

The housing 212 includes an integrally formed sidewall and the wall portion 211, that is, the housing 212 is manufactured using an integral forming process, such as stamping, casting, or extrusion molding. In other words, the sidewall and the wall portion 211 of the housing 212 are an integral structure.

The wall portion 211 is a wall of the housing 212 disposed opposite to the end cap 213 along the thickness direction X of the wall portion. A battery cell 20 with this structure can allow the region of the outer shell 21 provided with the scored groove 2115 to be distant from the end cap 213, and allow for no direct connection between the wall portion 211 and the end cap 213. This can mitigate the influence of stress generated during the connection between the end cap 213 and the housing 212 on the scored groove 2115, mitigating the phenomenon of cracking or structural strength reduction at the position of the wall portion 211 provided with the scored groove 2115. Consequently, this can effectively reduce the occurrence of premature valve opening of the battery cell 20 to relieve pressure, thereby enhancing the stability and service life of the battery cell 20.

According to some embodiments of this application, this application further provides a battery 100. The battery 100 includes the battery cell 20 in any one of the above solutions.

Referring to FIG. 2, the battery 100 may further include a box 10, with the battery cell 20 accommodated within the box 10. In some embodiments, the box 10 may include a first box body 11 and a second box body 12, with the first box body 11 and the second box body 12 fitting each other, and the first box body 11 and the second box body 12 together defining an assembly space for accommodating the battery cell 20.

Optionally, the second box body 12 may be a hollow structure with one end open, and the first box body 11 may be a plate-like structure, with the first box body 11 covering the open side of the second box body 12, so that the first box body 11 and the second box body 12 together define the assembly space. The first box body 11 and the second box body 12 may alternatively both be hollow structures with one side open, with the open side of the first box body 11 covering the open side of the second box body 12.

Certainly, the box 10 formed by the first box body 11 and the second box body 12 may be of various shapes, such as a cylinder or a cuboid. For example, in FIG. 2, the box 10 is a cuboidal structure.

In some embodiments, there may be one or more battery cells 20 provided within the box 10. For example, in FIG. 2, the box 10 of the battery 100 is provided with multiple battery cells 20, and the multiple battery cells 20 may be connected in series, in parallel, or series-parallel, where series-parallel means that the multiple battery cells 20 are connected in both series and parallel. The multiple battery cells 20 may be directly connected in series, in parallel, or in series-parallel, and then the entirety formed by the multiple battery cells 20 is accommodated within the box 10. Certainly, the battery 100 may alternatively be formed by first connecting the multiple battery cells 20 in series, in parallel, or in series-parallel to form battery modules, and then the multiple battery modules are connected in series, in parallel, or in series-parallel to form an entirety, which is accommodated within the box 10.

The battery 100 may further include other structures. For example, the battery 100 may further include a busbar component, and the busbar component connects multiple battery cells 20 to achieve electrical connection between the multiple battery cells 20.

It should be noted that in some embodiments, the battery 100 may not be provided with a box 10, and the battery 100 includes multiple battery cells 20, with the battery 100 formed by the multiple battery cells 20 being directly assembled onto an electric apparatus, to provide electrical energy to the electric apparatus through the multiple battery cells 20. That is, the box 10 may be part of the electric apparatus. The electric apparatus being a vehicle 1000 is used as an example. The box 10 may be part of the chassis structure of the vehicle 1000. For example, a portion of the box 10 may form at least part of the floor of the vehicle 1000, or a portion of the box 10 may form at least part of the crossbeams and longitudinal beams of the vehicle 1000.

According to some embodiments of this application, this application further provides an electric apparatus. The electric apparatus includes the battery 100 in any one of the above solutions, and the battery 100 is configured to provide electrical energy to the electric apparatus.

The electric apparatus may be any one of the aforementioned devices or systems that use the battery 100.

According to some embodiments of this application, referring to FIG. 3 to FIG. 5 and FIG. 8 to FIG. 14, this application provides a battery cell 20. The battery cell 20 includes an outer shell 21, an electrode assembly 22, and two electrode terminals 23. The electrode assembly 22 is accommodated within the outer shell 21, the electrode assembly 22 has two tabs 221, and the two tabs 221 of the electrode assembly 22 have opposite polarities. The two electrode terminals 23 are both insulatedly installed on the outer shell 21, and the two electrode terminals 23 are respectively electrically connected to the two tabs 221 of the electrode assembly 22 to achieve the input or output of the positive and negative electrodes of the battery cell 20. The outer shell 21 has a wall portion 211, and the outer shell 21 includes a housing 212 and an end cap 213. An accommodation cavity with an opening 2121 is formed within the housing 212, and the accommodation cavity is configured to accommodate the electrode assembly 22. The end cap 213 seals the opening 2121, the end cap 213 is the wall portion 211, and the two electrode terminals 23 are both installed on the end cap 213. Along the thickness direction X of the wall portion, the wall portion 211 has a first surface 2111 and a second surface 2112 opposite to each other, a sunken groove 2117 is provided on a side of the wall portion 211 facing away from an interior of the outer shell 21, and a protrusion 2118 is formed on a side of the wall portion 211 facing towards the interior of the outer shell 21 at a position corresponding to the sunken groove 2117. Two opposite surfaces of a bottom wall of the sunken groove 2117 are the first surface 2111 and the second surface 2112, respectively, and the first surface 2111 is provided facing away from the interior of the outer shell 21. The first surface 2111 is provided with a first groove 2113, the second surface 2112 is provided with a second groove 2114 at a position corresponding to the first groove 2113, a bottom surface of the first groove 2113 is provided with a scored groove 2115, and the wall portion 211 can rupture along the scored groove 2115 during pressure relief of the battery cell 20. The scored groove 2115 includes a first scored groove segment 2115a, a second scored groove segment 2115b, and a third scored groove segment 2115c. The first scored groove segment 2115a and the third scored groove segment 2115c are spaced apart. The second scored groove segment 2115b is perpendicular to the first scored groove segment 2115a and the third scored groove segment 2115c and is located between the first scored groove segment 2115a and the third scored groove segment 2115c. Two ends of the second scored groove segment 2115b are respectively connected to the first scored groove segment 2115a and the third scored groove segment 2115c. A connection position between the first scored groove segment 2115a and the second scored groove segment 2115b is located at a midpoint of the first scored groove segment 2115a, and a connection position between the third scored groove segment 2115c and the second scored groove segment 2115b is located at a midpoint of the third scored groove segment 2115c, forming two opening zones 2116 in regions of the wall portion 211 on two sides of the second scored groove segment 2115b, and making the scored groove 2115 an "H" shaped structure. The first scored groove segment 2115a, the second scored groove segment 2115b, and the third scored groove segment 2115c are provided along the edges of the opening zones 2116, and the opening zones 2116 are configured to open with the first scored groove segment 2115a, the second scored groove segment 2115b, and the third scored groove segment 2115c as boundaries. The first groove 2113 includes a first groove segment 2113a, a second groove segment 2113b, a third groove segment 2113c, and two fourth groove segments 2113d. The first groove segment 2113a and the third groove segment 2113c are spaced apart, and the second groove segment 2113b connects the first groove segment 2113a and the third groove segment 2113c. The first scored groove segment 2115a is provided on a bottom surface of the first groove segment 2113a, the second scored groove segment 2115b is provided on a bottom surface of the second groove segment 2113b, and the third scored groove segment 2115c is provided on a bottom surface of the third groove segment 2113c. Two ends of the fourth groove segment 2113d are respectively connected to one end of the first groove segment 2113a and one end of the third groove segment 2113c, and along an extension direction of the first groove segment 2113a, the fourth groove segment 2113d is spaced apart from the second groove segment 2113b, with the two fourth groove segments 2113d respectively located on two sides of the second groove segment 2113b, making the first groove 2113 a structure taking the form of "two stacked rectangles". The second groove 2114 includes a fifth groove segment 2114a, a sixth groove segment 2114b, a seventh groove segment 2114c, and two eighth groove segments 2114d. The fifth groove segment 2114a and the seventh groove segment 2114c are spaced apart, and the sixth groove segment 2114b connects the fifth groove segment 2114a and the seventh groove segment 2114c. Along the thickness direction X of the wall portion, the fifth groove segment 2114a is provided opposite the first groove segment 2113a, the sixth groove segment 2114b is provided opposite the second groove segment 2113b, and the seventh groove segment 2114c is provided opposite the third groove segment 2113c. Two ends of the eighth groove segment 2114d are respectively connected to one end of the fifth groove segment 2114a and one end of the seventh groove segment 2114c, and along an extension direction of the fifth groove segment 2114a, the eighth groove segment 2114d is spaced apart from the sixth groove segment 2114b, with the two eighth groove segments 2114d respectively located on two sides of the sixth groove segment 2114b. This makes the second groove 2114 a structure taking the form of "two stacked rectangles", and provided opposite the first groove 2113 along the thickness direction X of the wall portion, so that projections of the first groove 2113 and the second groove 2114 along the thickness direction X of the wall portion overlap. Along the thickness direction X of the wall portion, a distance between the bottom surface of the first groove 2113 and the bottom surface of the second groove 2114 is L, a depth of the first groove 2113 is H₁, and a depth of the second groove 2114 is H₂, satisfying 0.3 mm ≤ L ≤ 1 mm, and 0.2 ≤ H₁/H₂ ≤ 5. A width of the first groove 2113 is W₁, satisfying 0.5 mm ≤ W₁ ≤ 10 mm, and a width of the second groove 2114 is W₂, satisfying 0.5 mm ≤ W₂ ≤ 10 mm.

It should be noted that, in the absence of conflict, the embodiments and the features within the embodiments of this application may be combined with each other.

The above are only preferred embodiments of this application and are not intended to limit this application. For those skilled in the art, various modifications and changes may be made to this application. Any modifications, equivalent replacements, improvements, or the like made within the spirit and principles of this application should be included within the scope of protection of this application.

## Claims

1. A battery cell, comprising:
an outer shell having a wall portion, wherein along a thickness direction of the wall portion, the wall portion has a first surface and a second surface opposite to each other;
wherein the first surface is provided with a first groove, the second surface is provided with a second groove at a position corresponding to the first groove, a bottom surface of the first groove is provided with a scored groove, and the wall portion is capable of rupturing along the scored groove during pressure relief of the battery cell.

2. The battery cell according to claim 1, wherein the scored groove comprises a first scored groove segment and a second scored groove segment, and the first scored groove segment and the second scored groove segment intersect.

3. The battery cell according to claim 2, wherein the scored groove further comprises a third scored groove segment, the third scored groove segment is spaced apart from the first scored groove segment, and the second scored groove segment connects the first scored groove segment and the third scored groove segment.

4. The battery cell according to claim 3, wherein a connection position between the first scored groove segment and the second scored groove segment deviates from two ends of the first scored groove segment, and a connection position between the third scored groove segment and the second scored groove segment deviates from two ends of the third scored groove segment.

5. The battery cell according to claim 4, wherein the first scored groove segment and the third scored groove segment are both perpendicular to the second scored groove segment.

6. The battery cell according to claim 4 or 5, wherein the connection position between the first scored groove segment and the second scored groove segment is located at a midpoint of the first scored groove segment; and/or
the connection position between the third scored groove segment and the second scored groove segment is located at a midpoint of the third scored groove segment.

7. The battery cell according to any one of claims 3 to 6, wherein the first groove comprises a first groove segment, a second groove segment, and a third groove segment, the first groove segment and the third groove segment are spaced apart, and the second groove segment connects the first groove segment and the third groove segment;
wherein the first scored groove segment is provided on a bottom surface of the first groove segment, the second scored groove segment is provided on a bottom surface of the second groove segment, and the third scored groove segment is provided on a bottom surface of the third groove segment.

8. The battery cell according to claim 7, wherein the first groove further comprises a fourth groove segment, the fourth groove segment connects the first groove segment and the third groove segment, and along an extension direction of the first groove segment, the fourth groove segment is spaced apart from the second groove segment.

9. The battery cell according to claim 8, wherein two ends of the fourth groove segment are respectively connected to one end of the first groove segment and one end of the third groove segment.

10. The battery cell according to claim 8 or 9, wherein the first groove comprises two fourth groove segments, and along the extension direction of the first groove segment, the second groove segment is located between the two fourth groove segments.

11. The battery cell according to any one of claims 7 to 10, wherein the second groove comprises a fifth groove segment, a sixth groove segment, and a seventh groove segment, the fifth groove segment and the seventh groove segment are spaced apart, and the sixth groove segment connects the fifth groove segment and the seventh groove segment;
wherein along the thickness direction of the wall portion, the fifth groove segment is provided opposite the first groove segment, the sixth groove segment is provided opposite the second groove segment, and the seventh groove segment is provided opposite the third groove segment.

12. The battery cell according to claim **11,** wherein the second groove further comprises an eighth groove segment, the eighth groove segment connects the fifth groove segment and the seventh groove segment, and along an extension direction of the fifth groove segment, the eighth groove segment is spaced apart from the sixth groove segment.

13. The battery cell according to claim 12, wherein two ends of the eighth groove segment are respectively connected to one end of the fifth groove segment and one end of the seventh groove segment.

14. The battery cell according to claim 12 or 13, wherein the second groove comprises two eighth groove segments, and along the extension direction of the fifth groove segment, the sixth groove segment is located between the two eighth groove segments.

15. The battery cell according to any one of claims 1 to **14,** wherein along the thickness direction of the wall portion, a depth of the first groove is H₁, and a depth of the second groove is H₂, satisfying 0.2 ≤ H₁/H₂ ≤ 5.

16. The battery cell according to any one of claims 1 to 15, wherein along the thickness direction of the wall portion, a distance between the bottom surface of the first groove and a bottom surface of the second groove is L, satisfying 0.3 mm ≤ L ≤ 1 mm.

17. The battery cell according to any one of claims 1 to 16, wherein a width of the first groove is W₁, satisfying 0.5 mm ≤ W₁ ≤ 10 mm; and/or
a width of the second groove is W₂, satisfying 0.5 mm ≤ W₂ ≤ 10 mm.

18. The battery cell according to any one of claims 1 to 17, wherein the first groove is a stepped groove provided along the thickness direction of the wall portion; and/or
the second groove is a stepped groove provided along the thickness direction of the wall portion.

19. The battery cell according to any one of claims 1 to 18, wherein along the thickness direction of the wall portion, the first surface is provided facing away from an interior of the outer shell.

20. The battery cell according to any one of claims 1 to 19, wherein along the thickness direction of the wall portion, a sunken groove is provided on a side of the wall portion facing away from an interior of the outer shell, and two opposite surfaces of a bottom wall of the sunken groove are the first surface and the second surface, respectively.

21. The battery cell according to claim 20, wherein along the thickness direction of the wall portion, a protrusion is formed on a side of the wall portion facing towards the interior of the outer shell and at a position corresponding to the sunken groove.

22. The battery cell according to any one of claims 1 to 21, wherein the outer shell comprises:
a housing, in which an accommodation cavity with an opening is formed, wherein the accommodation cavity is configured to accommodate an electrode assembly; and
an end cap sealing the opening;
wherein the end cap is the wall portion.

23. The battery cell according to any one of claims 1 to 21, wherein the outer shell comprises:
a housing comprising an integrally formed sidewall and the wall portion, the sidewall surrounding a periphery of the wall portion, wherein along the thickness direction of the wall portion, one end of the sidewall is connected to the wall portion, the other end encloses to form an opening, and the sidewall and the wall portion together define an accommodation cavity configured to accommodate an electrode assembly; and
an end cap sealing the opening.

24. A battery comprising the battery cell according to any one of claims 1 to 23.

25. An electric apparatus comprising the battery according to claim 24.
